(19) Europäisches Patentamt
European Patent Office
Office européen des brevets

(11) **EP 3 919 193 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **21166140.0**

(22) Anmeldetag: **31.03.2021**

(51) Internationale Patentklassifikation (IPC):
*B08B 7/02* (2006.01)      *B22F 10/68* (2021.01)
*B29C 64/35* (2017.01)      *B33Y 40/20* (2020.01)
*B33Y 50/02* (2015.01)      *B22F 10/85* (2021.01)

(52) Gemeinsame Patentklassifikation (CPC):
(C-Sets verfügbar)
**B33Y 40/20; B08B 7/02; B22F 10/68; B22F 10/85; B29C 64/35; B33Y 50/02;** B22F 2202/01; B22F 2203/00; B22F 2999/00; Y02P 10/25   (Forts.)

(54) **VERFAHREN ZUM TRENNEN VON UNVERFESTIGT VERBLIEBENEM AUFBAUMATERIAL VON WENIGSTENS EINEM IM 3D-DRUCKVERFAHREN ENTSTANDENEN OBJEKT**

METHOD FOR SEPARATING NON-SOLIDIFIED CONSTRUCTION MATERIAL FROM AT LEAST ONE OBJECT FORMED USING 3D PRINTING

PROCÉDÉ DE SÉPARATION DE LA MATIÈRE DE CONSTRUCTION NON CONSOLIDÉ D'AU MOINS UN OBJET CRÉÉ SELON LE PROCÉDÉ D'IMPRESSION 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2020   DE 102019007437**

(43) Veröffentlichungstag der Anmeldung:
**08.12.2021   Patentblatt 2021/49**

(73) Patentinhaber: **Solukon Ingenieure GbR**
**86165 Augsburg (DE)**

(72) Erfinder: **Hartmann, Andreas**
**86391 Stadtbergen (DE)**

(74) Vertreter: **Wiedemann, Markus**
**Ziegeleistraße 16**
**86399 Bobingen (DE)**

(56) Entgegenhaltungen:
**WO-A1-2018/093958      WO-A1-2018/199894**
**WO-A2-2008/024538**

(52) Gemeinsame Patentklassifikation (CPC): (Forts.)

   C-Sets
   B22F 2999/00, B22F 10/68, B22F 2202/01,
   B22F 2203/00

**Beschreibung**

Die vorliegende Erfindung betrifft ein eine Vorrichtung zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts, gemäß dem Oberbegriff von Anspruch 1.

Eine gattungsgemäße Vorrichtung ist aus WO 2018/093958A1 bekannt. Dort wird ein Verfahren zum Entfernen von Stützmaterial von einem durch ein additives Herstellungsverfahren hergestellten Teil offenbart. Ultraschallwellen werden auf das Teil- und/oder Stützmaterial aufgebracht und bringen das Teil zum Schwingen, Die Frequenz der Ultraschallenergie kann abgestimmt werden, um zu bewirken, dass das Teil und/oder das Stützmaterial mit seiner Resonanzfrequenz vibriert.

Eine weitere Vorrichtung wird in WO 2015/071184 A1 bekannt. Dort wird zunächst eine Lasersinter- oder Laserschmelzvorrichtung als Bauvorrichtung beschrieben. Zum Aufbauen des Objekts enthält sie eine Baukammer, in der ein nach oben offener Wechselbehälter angeordnet ist, was bedeutet, dass er der Prozesskammer entnommen und wieder in sie eingesetzt werden kann. In dem Wechselbehälter ist ein in einer vertikalen Richtung bewegbarer Träger angeordnet, an dem eine Grundplatte angebracht ist, die den Wechselbehälter nach unten abschließt und damit dessen Boden bildet. Auf der Grundplatte ist eine Bauplattform angebracht sein, auf der das Objekt durch schichtweises Aufbringen und selektives Verfestigen eines pulverförmigen Aufbaumaterials aufgebaut wird. Zusätzlich zur Bauvorrichtung wird eine als Drehvorrichtung ausgebildete Auspackvorrichtung beschrieben. An einer Drehvorrichtung wird der Wechselbehälter nach dem Abschluss des Bauprozesses angebracht und dann der Wechselbehälter um einen Winkel von mindestens 90° aus der aufrechten Position herausgedreht, damit unverfestigt gebliebenes Pulver aus dem Wechselbehälter herausrieseln kann. Zusätzlich ist vorgesehen, dass Vibrationen von außen auf den Wechselbehälter aufgebracht werden, um ein Ablösen von Pulver von dem Objekt zu unterstützen.

Die Aufgabe der Erfindung darin, die Vorrichtung derart weiterzubilden, dass sie kostengünstig und einfach aufgebaut ist.

Diese Aufgabe wird erfindungsgemäß durch die Merkmale von Anspruch 1 gelöst.

Offenbarung der Erfindung

Das Herstellen des wenigstens einen dreidimensionalen Objekts, wie beispielsweise eines Bauteils oder Modells, welches dann mit dem erfindungsgemäßen Verfahren von unverfestigt verbliebenem Aufbaumaterial getrennt wird, erfolgt in einem Schichtbauverfahren mit Hilfe von Computerdaten, indem wiederholt dünne Schichten aus losem pulverförmigen Aufbaumaterial auf eine Bauplattform und/oder in einem Baubehälter aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher (Laser-)Strahlung zu verschmelzen oder zu versintern,

Unter einem Objekt soll daher im Sinne der Erfindung ein zusammen mit der Bauplattform hergestelltes Werkstück oder Bauteil verstanden werden, oder auch das Werkstück oder Bauteil alleine ohne eine Bauplattform sowie auch ein Objekt. Welches in einem Baubehälter generativ erzeugt worden ist.

Nach dem additiven Bauprozess haftet noch unverfestigt verbliebenes, pulverförmiges Aufbaumaterial an dem Objekt. Dieses unverfestigt verbliebene, pulverförmiges Aufbaumaterial soll von dem Objekt getrennt werden. Das Trennen des wenigstens einen Objekts von losem, nicht verfestigtem pulverförmigem Aufbaumaterial kann das komplette Auspacken des Objekts aus dem Kuchen losen Aufbaumaterials oder Pulvers beinhalten oder aber lediglich ein Abreinigen von Resten von losem Pulver oder Aufbaumaterial von dem wenigstens einen Objekt und optional auch von der Bauplattform und gegebenenfalls auch von Stützstrukturen, welche nach dem Auspacken noch an dem wenigstens einen Objekt vorhanden sind.

Durch eine Anregung des realen Objekts zu Schwingungen kann das unverfestigt verbliebene Aufbaumaterial insbesondere fluidisiert werden, wodurch es von dem Objekt besser abfließen kann. Der Schwingungserreger erzeugt daher Schwingungen mit der Erregerfrequenz $f_e$, die dann auf das reale Objekt übertragen werden.

Der Schwingungserreger kann dabei beispielsweise einen Rüttler oder Vibrator umfassen, welcher eine periodische Schwingung erzeugt. Alternativ oder zusätzlich kann der Schwingungserreger auch einen sog. Klopfer umfassen, welcher impulsartig eine Kraft erzeugt, welche dann das reale Objekt zu einer Schwingung anregt.

Die Erfindung hat dabei zum einen erkannt, dass die als Reaktion hierauf in dem realen Objekt hervorgerufenen Schwingungen nicht zwangsläufig die Erregerfrequenz fe des Schwingungserregers aufweisen, sondern bedingt beispielsweise durch Elastizitäten und Dämpfungseffekte von im Übertragungsweg zwischen dem Schwingungserreger und dem realen Objekt angeordnete Elemente wie beispielsweise eine das Objekt spannenden Spanneinrichtung auch hiervon abweichen können. Deshalb schlägt die Erfindung zum einen vor, den Istwert $f_{ist}$ der Schwingungsfrequenz f des durch die Erregerfrequenz $f_e$ zu Schwingungen angeregten realen Objekts durch eine Schwingungssensoreinrichtung zu erfassen und als elektrisches Schwingungssignal in die elektronische Steuerung einzusteuern.

Zum ändern hat die Erfindung erkannt, dass wenn beispielsweise der Ist-Wert der Frequenz und/oder der Schwingungsamplitude des zu Schwingungen angeregten Objekts als für die Schwingung charakteristische Größe erfasst werden soll(en), sich bei Beschleunigungsaufnehmern, die direkt am Objekt, an einer das Objekt spannenden Spanneinrichtung oder an der Schwenkeinrichtung angebracht werden, dass Problem ergibt, dass dann Leitungen für Strom und Messignale durch teure und aufwendige Drehdurchführungen der Drehvorrichtung geleitet werden müssen. Weiterhin können durch die Vibrationen solche Sensoren und Leitungen beschädigt werden.

Die Erfindung löst beide Probleme durch eine Vorrichtung zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts, welche eine elektronische Steuerung und einen von der elektronischen Steuerung gesteuerten Schwingungserreger umfasst, wobei der Schwingungserreger von der elektronischen Steuerung derart gesteuert ist, dass er das reale Objekt mit wenigstens einer Erregerfrequenz $f_e$ und/oder mit wenigstens einer Erregeramplitude $A_e$ zu Schwingungen anregt, um unverfestigt verbliebenes Aufbaumaterial von dem realen Objekt zu trennen, wobei die Vorrichtung weiterhin umfasst: Eine geschlossene, eine Wandung aufweisende Reinigungskammer, in welcher das Objekt angeordnet ist, um es im Rahmen des Reinigungsprozesses von dem unverfestigt verbliebenen Aufbaumaterial zu trennen, und eine Sensoreinrichtung, welche wenigstens eine charakteristische Größe der Schwingungen des realen Objekts erfasst und als elektrisches Signal in die elektronische Steuerung zur Auswertung einsteuert, wobei die Sensoreinrichtung wenigstens einen innerhalb oder außerhalb der Reinigungskammer angeordneten und nach einem berührungslosen Messprinzip arbeitenden Sensor aufweist, und/oder dass die Sensoreinrichtung wenigstens einen derart in oder an einer Wandung der Reinigungskammer angeordneten oder befestigten Sensor aufweist, dass der Sensor den Körperschall als charakteristische Größe erfassen kann, zu welchem die Wandung der Reinigungskammer durch den Luftschall angeregt wird, welchen das zu Schwingungen angeregte Objekt innerhalb der Reinigungskammer erzeugt.

Die wenigstens eine charakteristische Größe der Schwingungen des realen Objekts kann beispielsweise einen Istwert $f_{ist}$ einer Schwingungsfrequenz f und/oder einen Istwert $A_{ist}$ einer Schwingungsamplitude A des durch die Erregerfrequenz $f_e$ zu Schwingungen angeregten realen Objekts umfassen, wie auch einen Istwert $a_{ist}$ der Beschleunigung a der Wandung der Reinigungskammer. Im Fall eines nach einem berührungslosen Messprinzip arbeitenden Sensors kann auch der Schalldruckpegel des Luftschalls, den das reale Objekt infolge seiner Köperschall-Schwingungen abstrahlt, von der charakteristischen Größe umfasst sein.

Die geschlossene Reinigungskammer kann insbesondere staubdicht ausgeführt sein, wobei eine Zu- und Abfuhr des realen Objekts in die Reinigungskammer und aus der Reinigungskammer insbesondere durch ein zu öffnendes und verschließbares Mittel wie ein Schott, ein Tor oder eine Klappe erfolgt. Dann kann kein von dem Objekt abgereinigtes Aufbaumaterial nach außen dringen.

Zum andern kann dann die elektronische Steuerung den Schwingungserreger ansteuern, dass die Erregerfrequenz $f_e$ und/oder die Erregeramplitude Ae abhängig von dem elektrischen Signal, d.h. beispielsweise abhängig von dem erfassten Istwert $f_{ist}$ der Schwingungsfrequenz f und/oder abhängig von dem erfassten Istwert $A_{ist}$ der Schwingungsamplitude A angepasst bzw. variiert und/oder an einen Sollwert $f_{soll}$ der Schwingungsfrequenz f und/oder an einen Sollwert $A_{soll}$ der Schwingungsamplitude A angeglichen wird.

Weiterhin erspart die erfindungsgemäße Sensoreinrichtung aufwändige Kabeldurchführungen für strom- und signalleitende Kabel von dem beispielsweise in Rotationen versetzten Objekt zu der elektronischen Steuereinrichtung.

Denn wenigstens ein nach einem berührungslosen Messprinzip arbeitender Sensor der Sensoreinrichtung als erste Alternative ist ausgebildet für eine berührungslose direkte oder indirekte Erfassung der Schwingungen des realen Objekts bzw. der Auswirkungen dieser Schwingungen, ohne dass dieser Sensor hierzu an dem realen Objekt, an einer das reale Objekt spannenden Spanneinrichtung oder an einer das reale Objekt in Rotationen versetzenden Schwenkeinrichtung angeordnet ist.

Bei dieser ersten Alternative umfasst die Sensoreinrichtung als nach einem berührungslosen Messprinzip arbeitenden Sensor wenigstens ein Mikrophon, welches den Luftschall erfasst, welche die Schwingungen des zur Schwingung angeregten realen Objekts erzeugen. Das Mikrophon wandelt diesen Luftschall in ein elektrisches Mikrofonsignal als elektrisches Schwingungssignal um. Unter einem Mikrophon soll daher wie im üblichen Sinne ein Schallwandler verstanden werden, der Luftschall als Schallwechseldruckschwingungen in entsprechende elektrische Spannungs-änderungen als Mikrofonsignal umwandelt. Dieses unterscheidet Mikrophone von Tonabnehmern, die Festkörperschwingungen umsetzen. Beispielsweise umfasst das Mikrophon eine dünne, elastisch gelagerte Membran, die durch die Druckschwankungen des Luftschalls zu Bewegungen angeregt wird. Sie bildet durch ihre Bewegung die zeitliche Verteilung des Wechseldrucks nach. Ein integrierter Wandler, der mechanisch oder elektrisch mit der Membran gekoppelt ist, generiert daraus eine der Membranbewegung entsprechende Tonfrequenz-Wechselspannung oder eine entsprechende pulsierende Gleichspannung.

Der zweiten Alternative, dass die Sensoreinrichtung wenigstens einen Schwingungssensor umfasst, welcher in oder an der Wandung der Reinigungskammer angeordnet oder befestigt ist, liegt der Gedanke zugrunde, dass die Wandung der Reinigungskammer durch den Luftschall, welchen das zu Schwingungen angeregte Objekt innerhalb der Reinigungskammer erzeugt, zu Körperschallschwingungen angeregt wird, die dann ein Schwingungssensor wie beispielsweise ein Beschleunigungssensor erfassen kann. Der Schwingungssensor ist dann bevorzugt ausreichend steif in oder an der Wandung befestigt, damit der Körperschall von der Wandung auf den Schwingungssensor übertragen werden kann. Auch kann der Schwingungssensor derart an oder in der Wandung angeordnet sein und wenigstens eine Erfassungsrichtung aufweisen, dass er Schwingungen senkrecht zur Ebene der Wandung erfassen kann.

Der Begriff "Schwingungssensor" ist in einem weiten Sinne derart zu verstehen, dass ein solcher Schwingungssensor Körperschall erfassen und abhängig von dem Körperschall ein elektrisches Signal erzeugen kann. Hierzu zählen induktive Schwingungsaufnehmer als elektromagnetische Wandler, bei denen eine Bewegung eines metallischen Leiters innerhalb eines Magnetfelds zu einer messbaren Spannungsinduktion führt, sowie elektrodynamische Wandler, bei denen eine Bewegung von einer Spule in einem dauermagnetischen Feld zu einer messbaren Spannungsinduktion führt, wie auch piezoelektrische Schwingungssensoren, bei welchen ein mechanischer Druck eine elektrische Spannung in einer piezoelektrischen Keramik hervorruft.

In den Unteransprüchen sind vorteilhafte Weiterbildung der in Anspruch 1 angegebenen Erfindung definiert.

Das Mikrofon ist bevorzugt innerhalb einer (staubdichten) Reinigungskammer der Vorrichtung angeordnet oder befestigt, in welcher der Reinigungsprozess des realen Objekts bzw. das Trennen von unverfestigt verbliebenem Aufbaumaterial von dem realen Objekt erfolgt. Da die staubreiche Atmosphäre in der Reinigungskammer das Mikrophon beschädigen kann, ist das Mikrophon bevorzugt in einem separaten Gehäuse angeordnet. Das Mikrophon kann bevorzugt ein Richtmikrophon sein.

Eine Kombination von mehreren Mikrophonen kann die Messgenauigkeit verbessern. Denn mehrere in verschiedenen Richtungen ausgerichtete Mikrofone können im Zusammenwirken mit einer entsprechenden Auswertesoftware in der elektronischen Steuerung Fremdgeräusche erkennen und diese ausblenden. Alternativ kann das Mikrophon auch außerhalb der Reinigungskammer angeordnet sein. Die in der elektronischen Steuerung implementierte Auswertesoftware kann aus den Mikrophonsignalen durch Filterung Störgeräusche ausblenden.

Auch kann das Mikrophon den Luftschall erfassen, welche die Schwingungen des zu Schwingungen angeregten realen Objekts direkt oder indirekt erzeugen, und diesen Luftschall in ein Mikrofonsignal als elektrisches Schwingungssignal zu wandeln. Beispielsweise kann das Mikrophon (direkt) den Luftschall erfassen, welcher das zu Schwingungen angeregte reale Objekt direkt erzeugt (hat), indem der von den Schwingungen des realen Objekts erzeugte Luftschall (direkt) von dem Mikrophon erfasst wird. Alternativ oder zusätzlich kann das Mikrophon auch den Luftschall erfassen, welcher das zu Schwingungen angeregte reale Objekt indirekt erzeugt (hat). Denn die relativ großflächige Wandung der Reinigungskammer wird durch den von dem Objekt erzeugten Luftschall ihrerseits zu Körperschall angeregt, welcher dann von der Wandung wiederum als Luftschall abgestrahlt wird, der dann von dem Mikrophon zusätzlich zu dem direkt erfassten Luftschall erfasst werden kann.

Auch kann die Sensoreinrichtung wenigstens einen nach einem berührungslosen Messprinzip arbeitenden Schalldruckpegel-Sensor umfassen, welcher innerhalb oder außerhalb der Reinigungskammer angeordnet sein kann und welcher ein von dem Schalldruckpegel SPL des von dem realen Objekt abgestrahlten Luftschalls abhängiges elektrisches Signal erzeugt und in die elektronische Steuereinrichtung zur Auswertung einsteuert. Denn der Schalldruckpegel SPL des Luftschalls kann Informationen einerseits über die Intensität des Reinigungsprozesses und andererseits über Fehler und Störungen des Reinigungsprozesses liefern. Ein Beispiel dafür ist, dass der Schalldruckpegel SPL des Luftschalls umso höher ist, desto intensiver die Schwingungen des realen Objekts sind. Wenn hingegen ein Grenz-Schalldruckpegel $SPL_{grenz}$ durch den mittels des Schalldruckpegel-Sensors erfassten Istwerts SPList des Schalldruckpegels SPL überschritten wird und dies von der elektronischen Steuerung festgestellt wird, kann dies einen Hinweis auf eine Störung des Reinigungsprozesses darstellen, etwa, wenn das reale Objekt von zu erwarteten Schwingungsamplituden abweichende (zu große) Schwingungsamplituden aufweist, die dann einen entsprechend hohen Istwert SPList des Schalldruckpegels SPL erzeugen.

Alternativ oder zusätzlich kann die Sensoreinrichtung wenigstens einen nach einem berührungslosen optischen Messprinzip arbeitenden Sensor umfassen, wie beispielsweise einen Lasersensor. Lasersensoren eigenen sich aufgrund ihres berührungslosen Messprinzips und ihrer hohen Auflösung für die präzise Messungen von Abstand, Weg und Position sowie von Schwingungen fester Körper. Durch ein Analyseverfahren berechnet die elektronische Steuerung als Auswerteeinrichtung des Lasersensors insbesondere mittels Triangulation oder Phasenverschiebung den Istwert der Schwingungen des realen Objekts. Lasersensoren arbeiten überwiegend nach dem Laser-Triangulations-Prinzip.

Zusätzlich oder alternativ kann die Sensoreinrichtung wenigstens einen Schwingungssensor beispielsweise als Beschleunigungssensor umfassen, welcher mit der Wandung der Reinigungskammer (steif) verbunden ist, um wie oben beschrieben den Körperschall der Wandung der Reinigungskammer zu erfassen, welcher durch den von dem realen Objekt abgestrahlten Luftschall in der Wandung erzeugt wird, und damit einen Istwert $a_{ist}$ einer Beschleunigung a der Wandung der Reinigungskammer.

Gemäß einer Fortbildung ist in der elektronischen Steuerung eine Auswertesoftware implementiert, welche ausgebildet ist, dass sie anhand des elektrischen Signals, insbesondere abhängig von dem Istwert $f_{ist}$ der Schwingungsfrequenz f und/oder von dem Istwert $A_{ist}$ der Schwingungsamplitude A und/oder von dem Istwert $a_{ist}$ der Beschleunigung a der Wandung der Reinigungskammer und/oder abhängig von dem erfassten Istwert $SPL_{ist}$ des Schalldruckpegels SPL Störungen im Reinigungsprozess und/oder eine Beschädigung des Objekts erkennt und bei einem solchen Erkennen ein Störungssignal erzeugt. Dies kann durch einen Vergleich wenigstens eines Istwerts und mit einem entsprechenden Erfahrungswert oder einem entsprechende Grenzwert erfolgen.

Insbesondere ist die Auswertesoftware ausgebildet, dass das Störungssignal von der elektronischen Steuerung erzeugt wird, wenn die charakteristische Größe einen vorbestimmten Grenzwert für die charakteristische Größe überschritten hat.

Beispielsweise können spontane Veränderungen hinsichtlich Schalldruckpegel und/oder Schwingungsfrequenz und/oder Amplitude der Schwingungen des realen Objekts auf einen Fehler hinweisen, etwa dergestalt, dass das in der Regel an einer Spanneinrichtung eingespannte reale Objekt einen Riss oder eine Bruchstelle aufweist.

Langzeitige Veränderung hinsichtlich des Schalldruckpegels SPL und/oder der Schwingungsfrequenz f und/oder Amplitude A der Schwingungen des realen Objekts können auf einen Fehler hinweisen, der durch einen Verschleiß des Schwingungserregers und/oder der Schwenkeinrichtung verursacht ist.

Auch kann die Vorrichtung eine Wiedergabeeinrichtung umfassen, welche das Störungssignal optisch und/oder akustisch wiedergibt und/oder in einem Speicher abspeichert.

Auch kann die elektronische Steuerung den Schwingungserreger abhängig von dem wenigstens einen elektrischen Signal derart steuern oder regeln, dass die Erregerfrequenz fe und/oder die Erregeramplitude Ae durch den Schwingungserreger abhängig von dem wenigstens einen elektrischen Signal angepasst wird.

Weiterhin kann die Vorrichtung eine Spanneinrichtung und eine Schwenkeinrichtung umfassen, welche von der elektronischen Steuerung derart gesteuert ist, dass das mittels der Spanneinrichtung an der Schwenkeinrichtung gespannte reale Objekt um wenigstens eine Schwenkachse schwenkbar ist. Dies kann beispielsweise dadurch realisiert sein, dass das reale Objekt durch die Spanneinrichtung an einem Drehteller der Schwenkeinrichtung gespannt ist, welcher durch einen von der elektronischen Steuerung gesteuerten Antrieb um wenigstens eine Schwenkachse geschwenkt wird.

Gemäß einer Weiterbildung kann dann die elektronische Steuerung die Schwenkeinrichtung abhängig von dem wenigstens einen elektrischen Signal derart steuern oder regeln, dass die Schwenkeinrichtung eine durch sie auf das reale Objekt übertragene Rotation abhängig von dem wenigstens einen elektrischen Signal anpasst.

Wenn beispielsweise das elektrische Signal eine Information enthält, die einen einen Grenzwert für die charakteristische Größe übersteigenden Wert repräsentiert, beispielsweise eine übermäßige Schwingungsamplitude des realen Objekts, so kann die Schwenkeinrichtung durch die elektronische Steuerung dazu veranlasst werden, die Rotationsgeschwindigkeit und/oder einen Rotationsgrenzwinkel in einem Bereich zwischen 0 Grad und 360 Grad des realen Objekts anzupassen und insbesondere zu reduzieren, um die Gefahr zu reduzieren, dass durch die Rotation bedingte Fliehkräfte sich so zu den aus den Schwingungen des realen Objekts resultierenden Trägheitskräften addieren, dass das reale Objekt beschädigt und/oder aus der Spanneinrichtung entspannt wird.

Auch kann die elektronische Steuerung den Schwingungserreger derart steuern, dass eine Modalanalyse des realen Objekts durchgeführt und die Erregerfrequenz $f_e$ abhängig von wenigstens einem im Laufe der Modalanalyse gewonnenen modalen Parameter $\omega_e$ bestimmt wird. Unter Modalanalyse ist generell die Charakterisierung des dynamischen Verhaltens eines schwingungsfähigen Systems mit Hilfe seiner Eigenschwingungen zu verstehen, wobei das System hier durch das Objekt gebildet wird. Die modalen Parameter charakterisieren daher das Eigenschwingungsverhalten des Objekts.

Für die Modalanalyse liefert das elektrische Signal der Sensoreinrichtung eine notwendige Information über den aktuellen Schwingungszustand des realen Objekts, wie über den Ist-Wert $f_{ist}$ der Schwingungsfrequenz f und/oder über den Ist-Wert $A_{ist}$ der Schwingungsamplitude A des realen Objekts, um beispielsweise die Erregerfrequenz fe so anzupassen, dass sie mit der Eigenfrequenz $\omega_e$ des realen Objekts oder Vielfachen davon übereinstimmt oder davon gerade abweicht.

Die im Rahmen der experimentellen Modalanalyse bestimmten modalen Parameter des realen Objekts oder des computergenerierten Modells des realen Objekts umfassen beispielsweise die Eigenfrequenz $\omega_e$, die modale (Lehrsche) Dämpfung $D_e$, die Kenn-Nachgiebigkeit $N_e$, die modale Masse $m_e$ und die Eigenschwingungsform des Objekts. Für die Zwecke der Erfindung kann jeder dieser modalen Parameter oder eine beliebige Kombination der modalen Parameter herangezogen werden.

Bevorzugt können sich bei einem realen Objekt die Schwingungsanregung mit der Erregerfrequenz $f_e$ und die Durchführung der Modalanalyse zeitlich wenigstens teilweise überschneiden oder zeitlich hintereinander stattfinden, auch zyklisch, mit oder ohne zeitlichen Abstand dazwischen. Dabei muss am Anfang die Durchführung der Modalanalyse vor der Durchführung der Schwingungsanregung mit der Erregerfrequenz $f_e$ ausgeführt werden, damit die Erregerfrequenz $f_e$ in Abhängigkeit von dem wenigstens einen, im Laufe der Modalanalyse gewonnenen modalen Parameter bestimmt werden kann. Solange dann der wenigstens eine modale Parameter während des Schritts der Durchführung der Schwingungsanregung mit der Erregerfrequenz $f_e$ konstant bleibt, bleibt vorzugsweise auch die ermittelte Erregerfrequenz $f_e$ konstant. Wenn dann (in zeitlichem Abstand oder unmittelbar darauffolgend) wiederum der Schritt der Durchführung der Modalanalyse ausgeführt wird, und dabei festgestellt wird, dass sich der wenigstens eine modale Parameter verändert hat, beispielsweise dadurch, dass von dem realen Objekt infolge der Schwingungsanregung mit der Erregerfrequenz $f_e$ unverfestigt verbliebenes Aufbaumaterial getrennt worden ist, dann findet beispielsweise eine Anpassung oder Variation der Erregerfrequenz $f_e$ statt. Ein Beispiel für einen quantitativen Zusammenhang zwischen dem modalen Parameter Eigenfrequenz $\omega_e$ des Objekts und der Erregerfrequenz $f_e$, mit welcher das Objekt durch den Schwingungserreger dann angeregt wird, ist weiter unten angegeben.

Die Gewinnung der modalen Parameter oder wenigstens eines modalen Parameters eines durch ein additives Druckverfahren hergestellten Objekts von unverfestigt verbliebenem Aufbaumaterial bringt verschiedene vorteilhafte Anwendungen und Ausführungen mit sich:

Wenn im Rahmen der Modalanalyse als modaler Parameter beispielsweise die Eigenfrequenz $\omega_e$ des realen Objekts oder des computergenerierten Modells des realen Objekts ermittelt wird, dann kann eine Anregung des realen Objekts mit einer Erregerfrequenz $f_e$, welche etwa der Eigenfrequenz $\omega_e$ oder einer Vielfachen der Eigenfrequenz $\omega_e$ entspricht, vermieden werden. Denn eine Anregung des realen Objekts unter Eigenfrequenz $\omega_e$ oder einer Vielfachen der Eigenfrequenz $\omega_e$ würde zu relativ großen Schwingungsamplituden des Objekts führen. Da das Objekt aber in einer Trenn- oder Reinigungsvorrichtung oftmals frei auskragend eingespannt ist und zudem rotiert wird, wenn es von dem unverfestigt verbliebenem Aufbaumaterial getrennt wird, würden solche großen Amplituden zu einer hohen Belastung von Lagern und Maschinenbauteilen sowie von einer Einspanneinrichtung der Trenn- oder Reinigungsvorrichtung führen.

Konsequenterweise wird dann bevorzugt als Erregerfrequenz $f_e$ der von dem Schwingungserreger angeregten Schwingung eine von der bei der Modalanalyse ermittelten Eigenfrequenz $\omega_e$ oder einer Vielfachen der ermittelten Eigenfrequenz $\omega_e$ abweichende Erregerfrequenz $f_e$ herangezogen.

Alternativ hierzu kann eine Anregung des realen Objekts mit seiner Eigenfrequenz $\omega_e$ oder mit einer Vielfachen seiner Eigenfrequenz $\omega_e$ mit sich dann einstellenden relativ großen Schwingungsamplituden des realen Objekts wünschenswert sein, weil die relativ großen Schwingungsamplituden abhängig von dem jeweils verwendeten Aufbaumaterial zu einem verbesserten Lösen und Abfluss des Aufbaumaterials von dem realen Objekt führen können.

In diesem Fall kann als Erregerfrequenz $f_e$ der von dem Schwingungserreger angeregten Schwingung eine der ermittelten Eigenfrequenz $\omega_e$ oder einer Vielfachen der ermittelten Eigenfrequenz $\omega_e$ entsprechende Erregerfrequenz $f_e$ herangezogen werden.

Bevorzugt erfolgt die Rahmen der Modalanalyse durchgeführte Krafterregung und/oder Schwingungserregung des realen Objekts zeitlich getrennt oder zeitlich überschneidend in Bezug auf die Anregung des realen Objekts zu Schwingungen durch den Schwingungserreger mit der Erregerfrequenz $f_e$.

Weiterhin kann auch zu verschiedenen Zeitpunkten der wenigstens eine modale Parameter des realen Objekts bestimmt und zu einem Zeitpunkt zwischen diesen Zeitpunkten der Schritt der Anregung des realen Objekts zu Schwingungen durch den Schwingungserreger mit der Erregerfrequenz $f_e$ durchgeführt werden, wobei eine Größe G, welche eine Menge, eine Masse, einen Massenstrom, ein Volumen und/oder einen Volumenstrom des von dem realen Objekt dabei getrennten, unverfestigt verbliebenen Aufbaumaterials repräsentiert, abhängig von einer Änderung des wenigstens einen, zu den verschiedenen Zeitpunkten ermittelten modalen Parameters des realen Objekts ermittelt oder geschätzt wird.

Diese besondere Ausführung beruht auf der Erkenntnis, dass sich die modalen Parameter beeinflussende Eigenschaften des realen Objekts wie beispielsweise die Masse, die Geometrie, die Dämpfung und/oder die Steifigkeit des realen Objekts mit der Zeit verändert (verändern), wenn der Schritt der Anregung des realen Objekts mittels des Schwingungserregers durch die Schwingung mit der Erregerfrequenz durchgeführt wird. Denn im Laufe der Zeit wird immer mehr unverfestigt verbliebenes Aufbaumaterial von dem realen Objekt getrennt, wodurch das reale Objekt beispielsweise eine immer geringere Masse m aufweist. Folglich ändert sich mit der geringeren Masse m des Objekts die Eigenfrequenz $\omega_e$, für welche gilt:

$$\omega_e^2 = k/m \qquad\qquad (1)$$

wobei

$\omega_e$     die Eigenfrequenz des realen Objekts,

k     die Steifigkeit des realen Objekts, und

m     die Masse des realen Objekts inklusive des noch anhaftenden Aufbaumaterials ist.

Bei mit der Zeit durch das Trennen von Aufbaumaterial immer geringerer Masse des realen Objekts wird die Eigenfrequenz $\omega_e$ des realen Objekts daher immer größer. Folglich kann aus der sich innerhalb des Zeitintervalls beispielsweise kontinuierlich oder in Zeitabständen im Rahmen der dann durchgeführten Modalanalyse gemessenen Eigenfrequenz $\omega_e$ des realen Objekts auf die Größe G und daher auf den Fortschritt und/oder den Erfolg des Trennverfahrens geschlossen werden.

Die Information über die genannte Größe G erleichtert die Steuerung des Verfahrens, indem beispielsweise bei einem weniger erfolgreichen Trennen, bei welchem die Größe relativ gering ist oder unterhalb eines Grenzwerts $G_{grenz}$ für die Größe G liegt, die Erregerfrequenz $f_e$ der Schwingungsanregung solange variiert wird, bis die genannte Größe G einen höheren Wert oder einen maximalen Wert annimmt.

Andererseits kann die Erregerfrequenz $f_e$ der Schwingungsanregung konstant bleiben, wenn die genannte Größe G relativ groß ist oder den Grenzwert $G_{grenz}$ für die Größe G erreicht oder überschritten hat.

Die Erregerfrequenz $f_e$ der durch den Schwingungserreger angeregten Schwingung kann daher insbesondere abhängig von der oben genannten Größe (G) bestimmt oder variiert werden.

Andererseits, wenn die modalen Parameter des computergenerierten Modells des realen Objekts bestimmt werden, so beziehen sich diese auf das "nackte" reale Objekt, ohne an ihm noch anhaftendes Aufbaumaterial. Ein Vergleich dieser modalen Parameter mit den modalen Parametern, die mit dem realen Objekt, an dem noch Aufbaumaterial anhaftet, lässt dann einen Schluss auf die Menge des an dem realen Objekt anhaftenden Aufbaumaterial zu.

Die der Schritt der Durchführung der Modalanalyse des realen Objekts vorzugsweise ausgeführt werden, wenn sich das reale Objekt in einer Vorrichtung zum Trennen des Objekts von unverfestigt verbliebenem Aufbaumaterial befindet, in welcher unverfestigt verbliebenes Aufbaumaterial von dem realen Objekt getrennt wird. Dann wird die experimentelle Modalanalyse beispielsweise durch eine Steuerung der Vorrichtung gesteuert.

Alternativ kann die Modalanalyse des realen Objekts auch durchgeführt werden, wenn sich das reale Objekt außerhalb der Vorrichtung zum Trennen des Objekts von unverfestigt verbliebenem Aufbaumaterial befindet, in welcher unverfestigt verbliebenes Aufbaumaterial von dem realen Objekt getrennt wird. Dann wird die Modalanalyse des realen Objekts unabhängig von der Vorrichtung beispielsweise in einer separaten Modalanalyse-Einrichtung durchgeführt.

Vorzugsweise kann eine im Rahmen der Modalanalyse durchgeführte Kraftanregung des realen Objekts oder des computergenerierten Modells des realen Objekts zur Ermittlung des wenigstens einen modalen Parameters durch eine zeitlich variierende Kraft oder durch eine impulsartige Kraft in wenigstens einer Raumrichtung erfolgen. Dabei wird generell von drei Raumrichtungen ausgegangen, welche jeweils senkrecht zueinander sind.

Gemäß einer weiterbildenden Maßnahme kann die im Rahmen der Modalanalyse durchgeführte Kraftanregung des realen Objekts durch den Schwingungserreger erfolgen, durch welchen das reale Objekt zu einer Schwingung mit der Erregerfrequenz $f_e$ angeregt wird, um das unverfestigt verbliebene Aufbaumaterial von dem realen Objekt zu trennen. Der Schwingungserreger hat dann eine vorteilhafte Doppelfunktion, indem er gemäß einer ersten Funktion die Kraftanregung des realen Objekts im Rahmen der Modalanalyse durchführt, um den wenigstens einen modalen Parameter des Objekts zu bestimmen, und gemäß einer zweiten Funktion das reale Objekt mit der Erregerfrequenz $f_e$ anregt. Wie oben beschrieben kann der Schwingungserreger insbesondere einen Klopfer umfassen, der dann auch die impulsartige Kraft für die Modalanalyse erzeugt.

Wie oben bereits ausgeführt, wird im Rahmen der Modalanalyse als modaler Parameter bevorzugt die Eigenfrequenz $\omega_e$ des realen Objekts und/oder des computergenerierten Modells des realen Objekts bestimmt. Alternativ oder zusätzlich kann jedoch auch ein anderer modaler Parameter der oben genannten Parameter bestimmt werden, oder auch eine Kombination von verschiedenen modalen Parametern.

Wie oben ausgeführt, kann als Erregerfrequenz $f_e$ der von dem Schwingungserreger angeregten Schwingung eine von der ermittelten Eigenfrequenz $\omega_e$ oder von einer Vielfachen der ermittelten Eigenfrequenz $\omega_e$ abweichende Erregerfrequenz $f_e$ oder eine der ermittelten Eigenfrequenz $\omega_e$ oder einer Vielfachen der ermittelten Eigenfrequenz $\omega_e$ entsprechende Erregerfrequenz $f_e$ herangezogen werden.

Auch können zur Realisierung einer Frequenzregelung mittels eines Schwingungssensors ein Istwert $f_{ist}$ der (tatsächlichen) Schwingungsfrequenz des durch die Erregerfrequenz ($f_e$ zur Schwingung angeregten realen Objekts gemessen und eine Abweichung $\Delta f$ zwischen einem Sollwert $f_{soll}$ der Schwingungsfrequenz des realen Objekts und dem gemessenen Istwert $f_{ist}$ der Schwingungsfrequenz des realen Objekts bestimmt sowie die Abweichung $\Delta f$ im Rahmen einer Frequenzregelung ausgeregelt werden.

Als Sollwert $f_{soll}$ der Schwingungsfrequenz des realen Objekts kann dann beispielsweise die Eigenfrequenz $\omega_e$ oder eine Vielfache der ermittelten Eigenfrequenz $\omega_e$, oder eine von der ermittelten Eigenfrequenz $\omega_e$ oder von einer Vielfachen der ermittelten Eigenfrequenz $\omega_e$ abweichende Erregerfrequenz $f_e$ herangezogen werden.

Hintergrund der Frequenzregelung ist, dass eine optimale Schwingungsfrequenz des realen Objekts oder ein bestimmter Frequenzbereich von optimalen Schwingungsfrequenzen des realen Objekts existiert, bei welcher oder bei welchen das Trennergebnis sehr gut oder optimal ist und dass es dann wünschenswert ist, dass die weitere Anregung des realen Objekts durch den Schwingungserreger weiterhin mit einer Erregerfrequenz fe bzw. mit einer Erregerfrequenz fe erfolgt, bei welcher (welchen) sich dann die optimale Schwingungsfrequenz des realen Objekts bzw. die optimalen Schwingungsfrequenzen des realen Objekts einstellen.

Wie oben bereits ausgeführt, kann beispielsweise die Eigenfrequenz we des realen Objekts eine solche optimale Schwingungsfrequenz darstellen, oder auch eine von der Eigenfrequenz $\omega_e$ des realen Objekts abweichende Erregerfrequenz $f_e$.

Auch kann eine optimale Schwingungsfrequenz des realen Objekts oder ein bestimmter Frequenzbereich von optimalen Schwingungsfrequenzen des realen Objekts dadurch ermittelt werden, dass eine Größe G, welche die Menge, die Masse, den Massenstrom, das Volumen und/oder den Volumenstrom des von dem realen Objekt getrennten, unverfestigt verbliebenen Aufbaumaterials repräsentiert, durch wenigstens einen Sensor gemessen wird. Durch Variation der Erregerfrequenz fe und Messung der daraus resultierenden Schwingungsfrequenz des realen Objekts kann dann die optimale Erregerfrequenz fe oder die optimale Schwingungsfrequenz des realen Objekts ermittelt werden, bei welcher die Größe G maximal wird.

Auch kann zu verschiedenen Zeitpunkten der wenigstens eine modale Parameter des realen Objekts bestimmt und zu einem Zeitpunkt zwischen diesen Zeitpunkten der Schritt der Anregung des realen Objekts zu Schwingungen durch den Schwingungserreger mit der Erregerfrequenz $f_e$ durchgeführt werden, wobei die Größe G, welche die Menge, die Masse, den Massenstrom, das Volumen und/oder den Volumenstrom des von dem realen Objekt dabei getrennten, unverfestigt verbliebenen Aufbaumaterials repräsentiert, abhängig von einer Änderung des wenigstens einen, zu den verschiedenen Zeitpunkten ermittelten modalen Parameters des realen Objekts ermittelt oder geschätzt wird.

Mit dieser ermittelten Größe G kann das Verfahren dann beispielsweise derart fortgesetzt werden, dass überprüft wird, ob die Größe G kleiner als ein Grenzwert $G_{grenz}$ für die Größe G ist. Falls dies der Fall ist, so deutet dies daraufhin, dass das reale Objekt beispielsweise in einem hohen Grad von unverfestigtem Aufbaumaterial gereinigt worden ist. Dann kann eine Erregung des realen Objekts zu Schwingungen beendet werden. Falls dies jedoch nicht der Fall ist, so deutet dies daraufhin, dass das reale Objekt bisher in einem eher geringen Grad von unverfestigtem Aufbaumaterial gereinigt worden ist. Dann wird die Erregung des realen Objekts zu Schwingungen durch die elektronische Steuerung beispielsweise solange fortgesetzt bis die Größe G kleiner als der Grenzwert $G_{grenz}$ für die Größe G ist.

Bevorzugt kann auch die Erregerfrequenz $f_e$ oder die Soll-Schwingungsfrequenz $f_{soll}$ abhängig von der ermittelten oder geschätzten Größe G durch eine elektronische Steuerung bestimmt werden.

Die Erfindung betrifft gemäß eines weiteren Aspekts auch ein Verfahren zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts, wobei das Verfahren einen Schritt einer Anregung des realen Objekts zu Schwingungen durch einen Schwingungserreger mit einer Erregerfrequenz umfasst, um unverfestigt verbliebenes Aufbaumaterial von dem realen Objekt zu trennen. Das Verfahren umfasst wenigstens einen Schritt, in dem eine Modalanalyse des realen Objekts des realen Objekts durchgeführt wird, wobei im Laufe der Modalanalyse wenigstens ein modaler Parameter, insbesondere die Eigenfrequenz $\omega_e$ des realen Objekts bestimmt wird. Bei dem Verfahren wird zu verschiedenen Zeitpunkten $t_1$, $t_2$ der wenigstens eine modale Parameter, insbesondere die Eigenfrequenz $\omega_{e1}$, $\omega_{e2}$ des realen Objekts bestimmt und zu einem Zeitpunkt t* zwischen diesen Zeitpunkten $t_1$, $t_2$ der Schritt der Anregung des realen Objekts zu Schwingungen durch den Schwingungserreger mit der Erregerfrequenz $f_e$ durchgeführt, wobei eine Größe G, welche eine Menge, eine Masse, einen Massenstrom, ein Volumen und/oder einen Volumenstrom des von dem realen Objekt dabei getrennten, unverfestigt verbliebenen Aufbaumaterials repräsentiert, abhängig von einer Änderung des wenigstens einen, zu den verschiedenen Zeitpunkten $t_1$, $t_2$ ermittelten modalen Parameters, insbesondere abhängig von einer Änderung $\Delta\omega$ der Eigenfrequenz des realen Objekts $\omega_{e1}$, $\omega_{e2}$ ermittelt oder geschätzt wird.

Dann wird vorzugsweise überprüft, ob die Größe G kleiner oder größer gleich in Bezug auf einen Grenzwert $G_{grenz}$ für die Größe G ist.

Falls beispielsweise die Größe G kleiner als der Grenzwert $G_{grenz}$ für die Größe G ist, so deutet dies daraufhin, dass das reale Objekt beispielsweise in einem hohen Grad von unverfestigtem Aufbaumaterial gereinigt worden ist. Dann kann das Verfahren beendet werden. Falls dies jedoch nicht der Fall ist, so deutet dies daraufhin, dass das reale Objekt bisher in einem eher geringen Grad von unverfestigtem Aufbaumaterial gereinigt worden ist. Dann wird das Verfahren zurückgeschleift und wenigstens noch einmal durchlaufen bis die Größe G kleiner als der Grenzwert $G_{grenz}$ für die Größe G ist.

Der Schritt der Bestimmung der Eigenfrequenz $\omega_e$ des realen Objekts umfasst den Schritt des Erfassens des Istwerts $f_{ist}$ der Schwingung des realen Objekts durch ein berührungsloses Messverfahren, bei dem vorzugsweise wenigstens ein Mikrophon und/oder wenigstens ein optischer Sensor zur Erfassung des Luftschalls, welcher durch die Schwingung des realen Objekts entsteht, verwendet wird.

Insbesondere werden die oben beschriebenen Verfahrensschritte durch die elektronische Steuerung koordiniert gesteuert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Zeichnung

Nachstehend sind Ausführungsbeispiel der Erfindung in der Zeichnung dargestellt und in der nachfolgenden Beschreibung näher erläutert. In der Zeichnung zeigt

Fig. 1 eine perspektivische Ansicht eines Teils einer Vorrichtung zum Trennen von realen, additiv hergestellten Objekten von unverfestigt verbliebenem Aufbaumaterial;

Fig. 2 einen Ablaufplan eines Verfahrens, welches mit der Vorrichtung ausgeführt wird;

Fig. 3 eine schematische Darstellung einer Frequenzregelung gemäß einer bevorzugten Ausführungsform;

Fig. 4 einen Ablaufplan eines Verfahrens gemäß einer weiteren Ausführungsform der Erfindung, welches mit der Vorrichtung ausgeführt wird;

Fig. 5 eine schematische Darstellung der Vorrichtung gemäß einer bevorzugten Ausführungsform.

Beschreibung der Ausführungsbeispiele

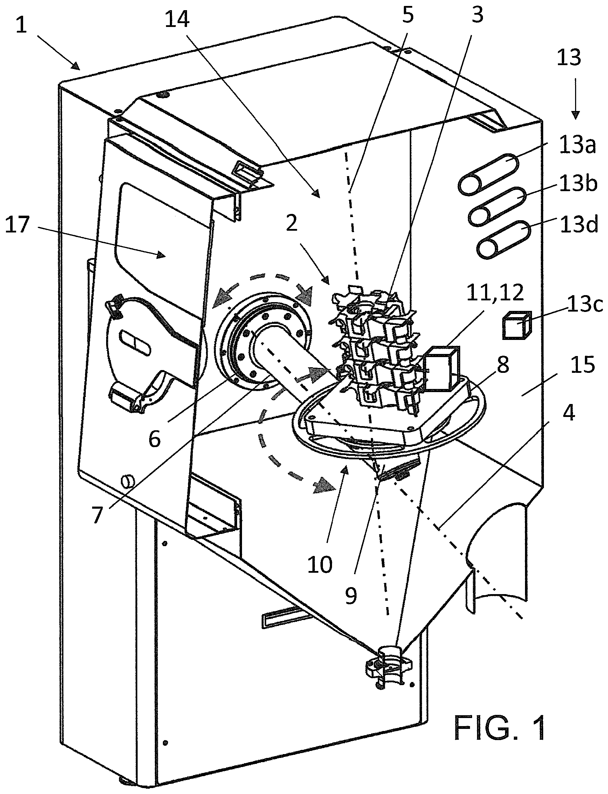

**Fig. 1** zeigt eine perspektivische Ansicht eines Teils einer Vorrichtung 1 zum Trennen von realen, additiv hergestellten Objekten 3 von unverfestigt verbliebenem Aufbaumaterial von unverfestigt verbliebenem Aufbaumaterial im Rahmen eines Reinigungsprozesses.

Die Vorrichtung 1 weist eine geschlossene, eine Wandung 15 aufweisende Reinigungskammer 14, in welcher hier beispielsweise lediglich ein reales Objekt 3 angeordnet ist, um es im Rahmen des Reinigungsprozesses von dem unverfestigt verbliebenen Aufbaumaterial zu trennen. Die Reinigungskammer verfügt beispielsweise über eine verschließbare Beladungsöffnung 17 zur Zu- und Abfuhr des realen Objekts 3. Die Beladungsöffnung 17 ist hier beispielsweise durch eine Klappe staubdicht verschließbar.

Die Vorrichtung 1 umfasst eine in der Reinigungskammer 14 angeordnete Schwenkvorrichtung 2, durch welche das reale Objekt 3 um beispielsweise hier zwei Schwenkachsen 4, 5 verschwenkt oder rotiert werden kann. Dazu beinhaltet die Schwenkvorrichtung 2 einen ersten Schwenkaktuator 6, welcher hier beispielsweise einen hier mit seinem einen Ende von einer Lagerstelle frei auskragendenden Schwenkarm 7 um eine beispielsweise horizontale erste Schwenkachse 4 schwenkt. Weiterhin umfasst die Schwenkvorrichtung 2 hier beispielsweise auch einen Drehteller 8, der beispielsweise an dem andern Ende des Schwenkarms 7 angeordnet und von einem zweiten Schwenkaktuator 9 um eine zweite, beispielsweise senkrecht zur ersten Schwenkachse 4 angeordnete Schwenkachse 5 verschwenkt. Der Schwenkbereich soll sich in beiden Fällen von 0 Grad bis 360 Grad (Vollrotation) erstrecken, wobei neben einer einmaligen Teil- oder Vollrotation auch mehrere Teil- oder Vollrotationen vorgesehen sind. Die beiden Schwenkaktuatoren 6, 9 werden durch eine hier nicht gezeigte elektronische Steuerung koordiniert gesteuert.

Beispielhaft ist hier ein additiv erzeugtes, reales Objekt 3 in einer Spanneinrichtung 10 der Schwenkvorrichtung 2 gespannt, wobei die Spanneinrichtung 10 hier beispielsweise auf dem Drehteller 8 angeordnet ist, so dass das Objekt 3 zusammen mit dem Drehteller 8 einerseits um die zweite Schwenkachse 5 und andererseits zusammen mit dem Schwenkarm 7 um die erste Schwenkachse 4 rotiert oder geschwenkt werden kann.

Durch die Rotation des realen Objekts 3 kann insbesondere unverfestigt verbliebenes Aufbaumaterial aus inneren Kanälen, Ausnehmungen und Vertiefungen sowie von der Oberfläche des realen Objekts 3 besser abfließen.

Auf dem Drehteller 8 ist ein Schwingungserreger, hier beispielsweise in Form eines Rüttlers 11 und eines Klopfers 12 angeordnet. Der Rüttler 11 erzeugt periodische Schwingungen oder Kräfte und der Klopfer 12 impulsartige Kräfte, wobei die Schwingungen und Kräfte auf den Drehteller 8 und von dort auf das in der Spanneinrichtung 10 gespannte reale Objekt 3 übertragen werden. Die in dem realen Objekt 3 angeregten Schwingungen begünstigen dann ebenfalls ein Abfließen und Trennen von unverfestigt verbliebenem Aufbaumaterial.

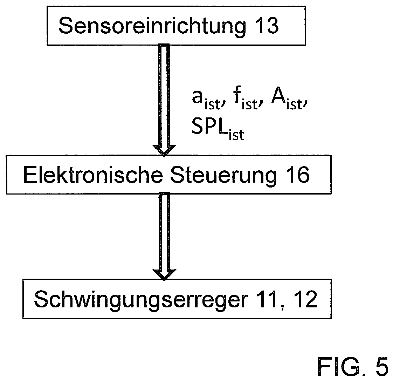

Gemäß **Fig. 1** und **Fig. 5** umfasst die Vorrichtung 1 auch eine Sensoreinrichtung 13, welche wenigstens eine charakteristische Größe der durch den Schwingungserreger 11, 12 angeregten Schwingungen des realen Objekts 3 erfasst und als elektrisches Signal in die elektronische Steuerung 16 zur Auswertung einsteuert.

Die Sensoreinrichtung 13 weist hier beispielsweise einen derart in oder an der Wandung 15 der Reinigungskammer 14 angeordneten oder befestigten Schwingungssensor 13c aufweist, dass der Schwingungssensor 13c den Körperschall oder die Beschleunigung $a_{ist}$ erfassen kann, zu welchem bzw. zu welcher die Wandung 15 der Reinigungskammer 14 durch den Luftschall angeregt wird, welchen das zu Schwingungen angeregte reale Objekt 3 innerhalb der Reinigungskammer 14 erzeugt. Der Schwingungssensor 13c ist hier beispielsweise als 3-Achs-Beschleunigungsensor ausgebildet, der Schwingungen in drei Raumachsen aufnehmen und als elektrisches Signal in die elektronische Steuerung 16 einsteuern kann.

Zusätzlich umfasst die Sensoreinrichtung 13 hier auch nach einem berührungslosen Messprinzip arbeitende Sensoren wie ein beispielsweise innerhalb der Reinigungskammer 14 angeordnetes Mikrophon 13a, welches den Luftschall erfasst, welche die Schwingungen des realen Objekts 3 direkt oder indirekt erzeugen, und in ein Mikrofonsignal als elektrisches Signal wandelt, das dann in die elektronische Steuerung 16 zur Auswertung eingesteuert wird.

Weiterhin umfasst die Sensoreinrichtung 13 einen beispielsweise innerhalb der Reinigungskammer 14 angeordneten Schalldruckpegel-Sensor 13d, welcher ein von dem Schalldruckpegel SPL des von dem zu Schwingungen angeregten realen Objekt 3 abgestrahlten Luftschalls abhängiges elektrisches Signal erzeugt, das dann ebenfalls in die elektronische Steuerung 16 zur Auswertung eingesteuert wird. Auch umfasst die Sensoreinrichtung 13 hier einen nach einem optischen und berührungslosen Messprinzip arbeitenden und in der Reinigungskammer 14 angeordneten Lasersensor 13b, welcher ein optisches Signal als elektrisches Signal erzeugt, das dann ebenfalls in die elektronische Steuerung 16 zur Auswertung eingesteuert wird.

Mit Hilfe dieser Sensoreinrichtung 13 können dann als charakteristische Größen der Schwingungen des realen Objekts 3 beispielsweise der Istwert fist der Schwingungsfrequenz f und/oder der Istwert $A_{ist}$ der Schwingungsamplitude A der Schwingungen des durch die Erregerfrequenz $f_e$ zu Schwingungen angeregten realen Objekts 3 erfasst werden, beispielsweise durch das Mikrophon 13a und/oder durch den Lasersensor 13b, wie auch der Istwert $a_{ist}$ der Beschleunigung a der Wandung 15 der Reinigungskammer 14 durch den Schwingungsaufnehmer 13c, als auch der Istwert $SPL_{ist}$ des Schalldruckpegels SPL des Luftschalls durch den Schalldruckpegel-Sensor 13d, den das reale Objekt 3 infolge seiner Köperschall-Schwingungen abstrahlt.

Zum andern sind in der elektronischen Steuerung 16 Routinen implementiert, welche die durch den Schwingungserreger 11, 12 erzeugte Erregerfrequenz $f_e$ abhängig von dem elektrischen Signal, d.h. hier beispielsweise abhängig von dem erfassten Istwert $f_{ist}$ der Schwingungsfrequenz f und/oder abhängig von dem erfassten Istwert $A_{ist}$ der Schwingungsamplitude A der Schwingungen des realen Objekts 3 und/oder abhängig von dem Istwert $SPL_{ist}$ des Schalldruckpegels SPL des Luftschalls und/oder abhängig von dem Istwert $a_{ist}$ der

Beschleunigung a der Wandung 15 der Reinigungskammer 14 anpassen bzw. variieren. Insbesondere kann der jeweilige Istwert an einen entsprechenden, beispielsweise von der elektronischen Steuerung 16 vorgegebenen Sollwert angeglichen werden.

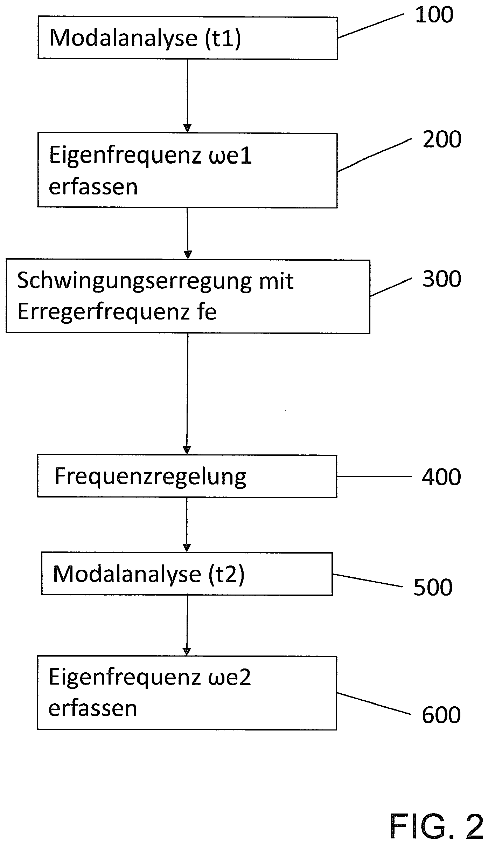

Durch die in der elektronischen Steuerung 16 implementierten Routinen ist insbesondere ein Verfahren realisiert, das in Fig. 2 in einer bevorzugten Ausführungsform als Ablaufplan gezeigt ist. Insbesondere sind in der elektronischen Steuerung 16 Routinen einer Modalanalyse zur Ermittlung wenigstens eines modalen Parameters des realen Objekts 3 implementiert.

Das Verfahren geht aus von der in **Fig. 1** gezeigten Situation, in welcher das reale Objekt 3 auf dem Drehteller 8 der Vorrichtung 1 gespannt ist. An dem realen Objekt 3 soll nach unverfestigt verbliebenes Aufbaumaterial anhaften, welches durch das Verfahren zumindest teilweise von dem realen Objekt 3 entfernt oder getrennt werden soll. Wenn von dem realen Objekt 3 die Rede ist, so ist damit je nach Fortschritt des Verfahrens, das reale Objekt 3 in einem Zustand gemeint, in welchem noch eine bestimmte Menge von unverfestigt verbliebenem Aufbaumaterial an ihm anhaftet oder, gegen Ende des Verfahrens, das Aufbaumaterial vollständig von dem realen Objekt 3 entfernt worden ist.

In einem Schritt 100 wird dann zu einem Zeitpunkt $t_1$ eine Modalanalyse des realen Objekts 3 durchgeführt. Des geschieht beispielsweise dadurch, dass die elektronische Steuerung 16 den Klopfer 12 des Schwingungserregers ansteuert, um eine impulsartige Kraft zu erzeugen, welche dann auf das reale Objekt 3 übertragen wird, welches dann in seiner charakteristischen Eigenschwingungsform und mit seiner Eigenfrequenz $\omega_e$ schwingt. Die Eigenfrequenz $\omega_e$ des realen Objekts wird dann von der Sensoreinrichtung 13 erfasst, insbesondere von dem Schwingungssensor 13c und/oder von dem Mikrophon 13a und/oder von dem Lasersensor 13b, weil durch diese Sensoren insbesondere der Istwert $f_{ist}$ der Schwingungsfrequenz der Schwingungen des realen Objekts aufgrund der Anregung auf einfache Weise erfassbar ist. Auch könnte die Eigenfrequenz $\omega_e$ des realen Objekts mit Hilfe des Schalldruckpegel-Sensors 13d erfasst werden, weil der Schalldruck des in seiner Eigenfrequenz $\omega_e$ schwingenden realen Objekts relativ groß ist. Während der Modalanalyse ist die Schwenkvorrichtung 2 bevorzugt nicht aktiviert, so dass das reale Objekt 3 während der Modalanalyse statisch ist.

Die Schwingungserregung des realen Objekts 3 durch den Klopfer 12 während der Modalanalyse, damit dieses alleine in seiner Eigenschwingung schwingt, ist vorzugsweise getrennt zu betrachten von der Schwingungserregung, welche der Klopfer 12 und/oder der Rüttler 11 alleine zu dem Zweck erzeugt (erzeugen), um unverfestigt verbliebenes Aufbaumaterial von dem realen Objekt 3 zu trennen. Daher entfällt die zuletzt genannte Schwingungserregung vorzugsweise während der Modalanalyse, um diese nicht zu beeinträchtigen.

Anstatt in der Vorrichtung 1 könnte die Modalanalyse an dem realen Objekt 3 auch außerhalb der Vorrichtung 1 durchgeführt und wenigstens ein modaler Parameter dann von außen in einen Speicher der elektronischen Steuerung 16 eingelesen werden.

Dann wird in einem Schritt 200 als modaler Parameter beispielsweise die zum Zeitpunkt $t_1$ vorliegende Eigenfrequenz $\omega_{e1}$ des realen Objekts 3 durch die Sensoreinrichtung 13 erfasst und in der elektronischen Steuerung 16 beispielsweise in einem Speicher gespeichert.

In einem nachfolgenden Schritt 300 steuert die elektronische Steuerung 16 vorzugsweise den Rüttler 11 zur Erzeugung einer Schwingung mit einer Erregerfrequenz $f_e$ an, welche hier beispielsweise von der ermittelten, zum Zeitpunkt $t_1$ vorliegenden Eigenfrequenz $\omega_{e1}$ des realen Objekts 3 oder von einer Vielfachen dieser Eigenfrequenz $\omega_{e1}$ abweicht. Damit soll vermieden werden, dass die Schwingungsamplituden A des realen Objekts 3 bei der Anregung zu groß werden und dann das reale Objekt 3 schädigen.

Alternativ hierzu könnte die elektronische Steuerung 16 einen oder beide Schwingungserreger 11, 12 auch ansteuern, damit diese(r) das reale Objekt 3 mit einer Erregerfrequenz $f_e$ erregen (erregt), welche gerade der ermittelten, zum Zeitpunkt $t_1$ vorliegenden Eigenfrequenz $\omega_{e1}$ des realen Objekts 3 oder einer Vielfachen dieser Eigenfrequenz $\omega_{e1}$ entspricht, um relativ große Schwingungsamplituden A des realen Objekts 3 zu erzeugen, welche dann zu einer verbesserten Trennung von unverfestigt verbliebenem Aufbaumaterial beitragen können. Bevorzugt gleichzeitig mit der Schwingungserregung durch den Schwingungserreger 11, 12 wird die Schwenkvorrichtung 2 aktiviert, damit das reale Objekt 3 um die beiden Schwenkachsen 4, 5 jeweils beispielsweise mehrmals rotiert.

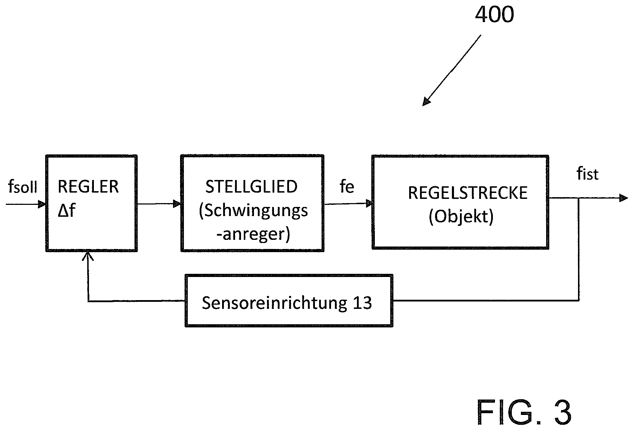

Damit sich die Schwingungsfrequenz f des realen Objekts 3, welche wie oben beschrieben beispielsweise gerade der zum Zeitpunkt $t_1$ vorliegenden Eigenfrequenz $\omega_{e1}$ des realen Objekts 3 entsprechen oder alternativ von dieser abweichen soll, zumindest über einen gewissen Zeitraum hinweg in oder an dem realen Objekt 3 einstellt, folgt im optionalen Schritt 400 eine Regelung der Schwingungsfrequenz f des realen Objekts 3. Diese Frequenzregelung des Schritts 400 ist in Fig. 3 dargestellt.

Dazu wird mittels der Sensoreinrichtung 13 wie oben beschrieben der Istwert $f_{ist}$ der Schwingungsfrequenz f des realen, durch die Erregerfrequenz $f_e$ des Schwingungserregers 11, 12 zu Schwingungen angeregten realen Objekts 3 gemessen und ein entsprechendes Messsignal in die elektronische Steuerung 16 eingesteuert, in welcher der Regler mit den Regelalgorithmen der Frequenzregelung implementiert ist. Das Stellglied der Regelung wird dann durch den Schwingungserreger 11, 12 und die die Regelstrecke durch das reale Objekt 3 und dessen Einspannung gebildet. Die Führungsgröße der Regelung ist die jeweils gewünschte Soll-Schwingungsfrequenz $f_{soll}$ des realen Objekts 3, welche hier beispielsweise der zum Zeitpunkt $t_1$ vorliegenden Eigenfrequenz $\omega_{e1}$ des realen Objekts 3 entsprechen oder alternativ von dieser gerade abweichen soll.

Die Regelalgorithmen der Regelung bestimmen dann eine Abweichung $\Delta f$ zwischen der Sollwert $f_{soll}$ der Schwingungsfrequenz f und dem gemessenen Istwert $f_{ist}$ der Schwingungsfrequenz f des realen Objekts 3 und regeln diese aus, indem sie den Schwingungserreger 12, 13 ansteuern, eine entsprechende Erregerfrequenz $f_e$ zu erzeugen.

Da durch die Schwingungsanregung des realen Objekts 3 unverfestigt verbliebenes Aufbaumaterial mit der Zeit von dem realen Objekt 3 getrennt wird und dadurch die Masse m des realen Objekts 3 abnimmt, kann das Verfahren einen weiteren, in **Fig. 2** gezeigten Schritt 500 umfassen, in welchem zu einem Zeitpunkt $t_2$, der später als der Zeitpunkt $t_1$ ist, wiederum eine Modalanalyse an dem realen Objekt 3 durchgeführt wird, beispielsweise mit dem Ziel, die durch den Masseverlust $\Delta m$ durch das inzwischen stattgefundene Abfließen von unverfestigt verbliebenem Aufbaumaterial von dem realen Objekt 3 veränderte Eigenfrequenz $\omega_{e2}$ des realen Objekts 3 in einem Schritt 600 mittels des Schwingungssensors 13 zu ermitteln. Dabei soll bevorzugt wiederum die Schwenkvorrichtung 2 inaktiv gesetzt werden und die Schwingungserregung zum Trennen von Aufbaumaterial ausbleiben.

Durch die in Schritt 300 erfolgte Schwingungserregung und den damit einher gehenden Masseverlust $\Delta m$ des realen Objekts wird gemäß obiger Gleichung (1) die die Eigenfrequenz $\omega_{e2}$ des realen Objekts 3 zum Zeitpunkt $t_2$ größer als Eigenfrequenz $\omega_{e1}$ zum Zeitpunkt $t_1$.

In optional nachfolgenden Schritten kann dann abhängig von der (neuen) ermittelten Eigenfrequenz $\omega_{e2}$ des realen Objekts 3 zum Zeitpunkt $t_2$ dann eine geeignete Erregerfrequenz fe bestimmt werden, damit das reale Objekt 3 beispielsweise mit einem bestimmten Sollwert $f_{soll}$ der Schwingungsfrequenz f schwingt, wobei hierzu wiederum eine Frequenzregelung gemäß Schritt 400 und **Fig. 3** durchgeführt werden kann.

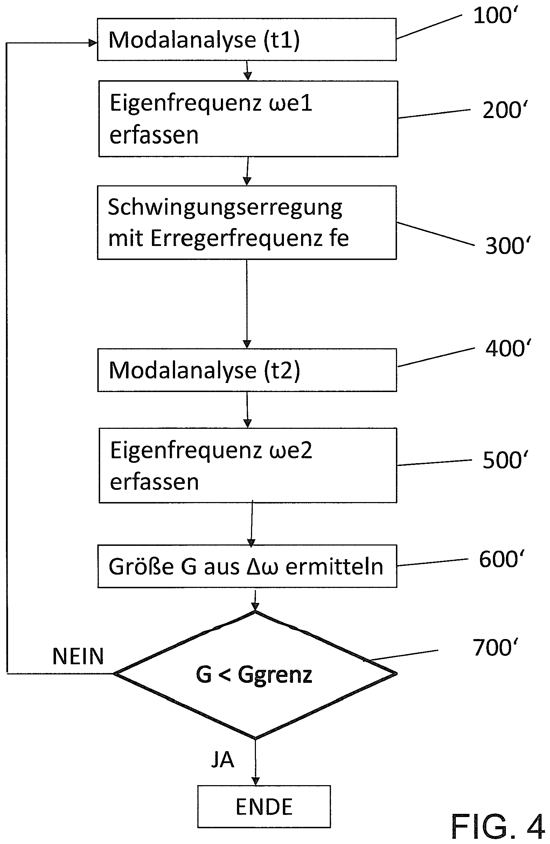

Das in **Fig. 4** in einer weiteren Ausführungsform als Ablaufplan gezeigte Verfahren, welches ebenfalls in den Routinen der elektronischen Steuerung 16 realisiert sein kann, geht ebenfalls aus von der in **Fig. 1** gezeigten Situation, in welcher das reale Objekt 3 auf dem Drehteller 8 der Schwenkvorrichtung 2 gespannt ist. Wie bei Ausführungsform von **Fig. 3** wird in einem Schritt 100' eine (erste) Modalanalyse des realen Objekts 3 zu einem Zeitpunkt $t_1$ und dann in einem Schritt 200' als modaler Parameter beispielsweise wiederum die Eigenfrequenz $\omega_{e1}$ des realen Objekts 3 wie oben beschrieben durch den Schwingungssensor 13 erfasst und als Schwingungssignal an die elektronische Steuerung gemeldet und dort beispielsweise in einem Speicher gespeichert.

In einem nachfolgenden Schritt 300' steuert die elektronische Steuerung dann den Schwingungserreger 12, 13 zu einem Zeitpunkt t* zur Erzeugung einer Schwingung mit einer Erregerfrequenz $f_e$ an, welche hier beispielsweise von der ermittelten Eigenfrequenz $\omega_{e1}$ des

realen Objekts oder von einer Vielfachen dieser Eigenfrequenz $\omega_{e1}$ abweicht.

Alternativ hierzu könnte die elektronische Steuerung den Schwingungserreger auch ansteuern, um eine Erregerfrequenz $f_e$ zu erzeugen, welche gerade der ermittelten Eigenfrequenz $\omega_{e1}$ des realen Objekts oder einer Vielfachen dieser Eigenfrequenz $\omega_{e1}$ entspricht.

Da durch die Schwingungsanregung des realen Objekts 3 mit der Erregerfrequenz $f_e$ unverfestigt verbliebenes Aufbaumaterial mit der Zeit von dem realen Objekt 3 getrennt wird und dadurch die Masse m des realen Objekts 3 abnimmt, umfasst die hier beschriebene Ausführungsform des Verfahrens einen Schritt 400', in welchem zu einem gegenüber dem Zeitpunkt $t_1$ späteren Zeitpunkt $t_2$ eine (zweite) Modalanalyse an dem realen Objekt 3 durchgeführt wird, beispielsweise mit dem Ziel, die durch den Masseverlust $\Delta m$ durch das inzwischen stattgefundene Abfließen von unverfestigt verbliebenem Aufbaumaterial von dem realen Objekt 3 veränderte Eigenfrequenz $\omega_{e2}$ des realen Objekts 3 in einem Schritt 500' mittels des Schwingungssensors 13 zu ermitteln.

In einem nachfolgenden Schritt 600' kann dann eine Abweichung/Differenz $\Delta\omega$ zwischen der zu dem Zeitpunkt $t_1$ ermittelten Eigenfrequenz $\omega_{e1}$ und der zu dem Zeitpunkt $t_2$ ermittelten Eigenfrequenz $\omega_{e2}$ des realen Objekts 3 bestimmt werden.

Der Zusammenhang zwischen der Masse m des realen Objekts 3, zu welcher auch die Masse des unverfestigt am realen Objekt 3 verbliebenen oder anhaftenden Aufbaumaterials zu rechnen ist, und der Eigenfrequenz $\omega$ des realen Objekts 3 ist oben in Gleichung (1) angegeben. Folglich geht mit dem Masseverlust $\Delta m$ des realen Objekts 3 eine proportionale Erhöhung der Eigenfrequenz $\omega$ des realen Objekts 3 einher. Die Abweichung/Differenz $\Delta\omega$ repräsentiert dann den Masseverlust des realen Objekts 3 infolge der Schwingungserregung in Schritt 300'.

Dann wird in einem Schritt 600' eine Größe G, welche eine Menge, eine Masse, einen Massenstrom, ein Volumen und/oder einen Volumenstrom des von dem realen Objekt 3 im Schritt 300' getrennten, unverfestigt verbliebenen Aufbaumaterials repräsentiert, abhängig von der Abweichung/Differenz $\Delta\omega$ der zu den Zeitpunkten $t_1$ und $t_2$ ermittelten Eigenfrequenzen $\omega_{e1}$ und $\omega_{e2}$ ermittelt oder geschätzt. Diese Größe G entspricht dann beispielsweise dem Masseverlust $\Delta m$.

Mit dieser ermittelten Größe G kann das Verfahren dann beispielsweise in einem Schritt 700' fortgesetzt werden, in welchem überprüft wird, ob die Größe G kleiner als ein (unterer) Grenzwert $G_{grenz}$ für die Größe G ist. Falls dies der Fall ist ("JA"), so deutet dies daraufhin, dass das reale Objekt 3 beispielsweise in einem hohen Grad oder vollständig von unverfestigtem Aufbaumaterial gereinigt worden ist. Dann kann das Verfahren beendet werden ("ENDE").

Falls dies in Schritt 700' jedoch nicht der Fall ist ("NEIN"), so deutet dies daraufhin, dass das reale Objekt 3 bisher in einem eher geringen Grad von unverfestigtem Aufbaumaterial gereinigt worden ist. Dann wird das Verfahren auf den Schritt 100' zurückgeschleift und die Schritte 100' bis 700' zulange durchlaufen bis das Ergebnis in Schritt 700' ein "JA" ist.

Wie bei der Ausführungsform von **Fig. 3** unterbleibt vorzugsweise während der Modalanalysen und der Messung der Eigenfrequenz $\omega_{e1}$ und $\omega_{e2}$ eine Rotation des realen Objekts 3 durch Inaktivierung der Schwenkvorrichtung 2. Weiterhin findet dann auch bevorzugt keine Schwingungsanregung zum Trennen von Aufbaumaterial statt.

Auch kann die Ausführungsform des Verfahrens gemäß **Fig. 4** mit einer Frequenzregelung der Schwingungsfrequenz f des realen Objekts 3 gemäß **Fig. 3** und Schritt 400 von **Fig. 2** kombiniert werden.

Auch kann bei der Ausführungsform von **Fig. 4** in Schritt 300' die Erregerfrequenz $f_e$ der durch den Schwingungserreger 12, 13 angeregten Schwingung zusätzlich abhängig von der zuletzt ermittelten oder geschätzten Größe G bestimmt werden.

Bezuaszahlenliste

| | |
|---|---|
| 1 | Vorrichtung |
| 2 | Schwenkvorrichtung |
| 3 | reales Objekt |
| 4 | erste Schwenkachse |
| 5 | zweite Schwenkachse |
| 6 | erster Schwenkaktuator |
| 7 | Schwenkarm |
| 8 | Drehteller |
| 9 | zweiter Schwenkaktuator |
| 10 | Spanneinrichtung |
| 11 | Rüttler |
| 12 | Klopfer |
| 13 | Sensoreinrichtung |
| 13a | Mikrophon |
| 13b | Lasersensor |
| 13c | Schwingungssensor |
| 13d | Schalldruckpegel-Sensor |
| 14 | Reinigungskammer |
| 15 | Wandung |
| 16 | elektronische Steuerung |
| 17 | Beladungsöffnung |
| $f_e$ | Erregerfrequenz |
| f | Schwingungsfrequenz |
| $f_{soll}$ | Soll-Schwingungsfrequenz |
| $f_{ist}$ | Ist-Schwingungsfrequenz |
| $\omega_e$ | Eigenfrequenz |
| $t_1$ | Zeitpunkt |
| $t_2$ | Zeitpunkt |
| $t^*$ | Zeitpunkt |
| $\omega_{e1}$ | Eigenfrequenz zum Zeitpunkt $t_1$ |
| $\omega_{e2}$ | Eigenfrequenz zum Zeitpunkt $t_2$ |
| $\Delta\omega$ | Abweichung/Differenz |
| G | Größe |

**Patentansprüche**

1. Vorrichtung zum Trennen von unverfestigt verbliebenem Aufbaumaterial von wenigstens einem durch schichtweises Aufbringen und selektives Verfestigen des Aufbaumaterials im Rahmen eines generativen Bauprozesses entstandenen realen Objekts (3), welche eine elektronische Steuerung (16) und einen von der elektronischen Steuerung (16) gesteuerten Schwingungserreger (11, 12) umfasst, wobei der Schwingungserreger (11, 12) von der elektronischen Steuerung (16) derart gesteuert ist, dass er das reale Objekt (3) mit wenigstens einer Erregerfrequenz ($f_e$) und/oder mit wenigstens einer Erregeramplitude ($A_e$) zu Schwingungen anregt, um im Rahmen eines Reinigungsprozesses unverfestigt verbliebenes Aufbaumaterial von dem realen Objekt (3) zu trennen, wobei sie weiterhin umfasst:

   a) eine geschlossene, eine Wandung (15) aufweisende Reinigungskammer (14), in welcher das Objekt (3) angeordnet ist, um es im Rahmen des Reinigungsprozesses von dem unverfestigt verbliebenen Aufbaumaterial zu trennen, und
   b) eine Sensoreinrichtung (13), welche wenigstens eine charakteristische Größe der Schwingungen des realen Objekts (3) erfasst und als elektrisches Signal in die elektronische Steuerung (16) zur Auswertung einsteuert, wobei
   c) die Sensoreinrichtung (13)

   c1) wenigstens einen innerhalb oder außerhalb der Reinigungskammer (14) angeordneten und nach einem berührungslosen Messprinzip arbeitenden Sensor (13a, 13b, 13d) aufweist, **dadurch gekennzeichnet, dass** die Sensoreinrichtung (13) wenigstens ein innerhalb der Reinigungskammer (14) oder außerhalb der Reinigungskammer (14) angeordnetes und nach einem berührungslosen Messprinzip arbeitendes Mikrophon (13a) umfasst, welches den Luftschall erfasst, welche die Schwingungen des realen Objekts (3) direkt oder indirekt erzeugen, und in ein Mikrofonsignal als elektrisches Signal Wandelt, und/oder dass
   c2) die Sensoreinrichtung (13) wenigstens einen derart in oder an einer Wandung (15) der Reinigungskammer (14) angeordneten oder befestigten Schwingungssensor (13c) aufweist, dass der Schwingungssensor (13c) den Körperschall erfassen kann, zu welchem die Wandung (15) der Reinigungskammer (14) durch den Luftschall angeregt wird, welchen das zu Schwingungen angeregte reale Objekt (3) innerhalb der Reinigungskammer (14) erzeugt.

2. Vorrichtung nach Anspruch 1, **dadurch gekennzeichnet, dass** die charakteristische Größe, welche von der Sensoreinrichtung (13) erfasst wird, wenigstens Folgendes umfasst: Einen Istwert ($f_{ist}$) einer Schwingungsfrequenz ($f$) und/oder einen Istwert ($A_{ist}$) einer Schwingungsamplitude ($A$) der Schwingungen des realen Objekts (3) und/oder einen Istwert ($a_{ist}$) einer Beschleunigung ($a$) der Wandung (15) der Reinigungskammer (14) und/oder einen Istwert ($SPL_{ist}$) eines Schalldruckpegels ($SPL$) des Luftschalls, den das reale Objekt (3) infolge seiner Schwingungen abstrahlt.

3. Vorrichtung nach einem der vorhergehenden Ansprüche, **dadurch gekennzeichnet, dass** die Sensoreinrichtung (13) wenigstens einen nach einem berührungslosen Messprinzip arbeitenden und innerhalb der Reinigungskammer (14) oder außerhalb der Reinigungskammer (14) angeordneten Schalldruckpegel-Sensor (13d) umfasst, welcher ein von dem Schalldruckpegel (SPL) des von dem realen Objekt (3) abgestrahlten Luftschalls abhängiges elektrisches Signal erzeugt.

4. Vorrichtung nach einem der vorhergehenden Ansprüche, **dadurch gekennzeichnet, dass** die Sensoreinrichtung (13) wenigstens einen nach einem optischen und berührungslosen Messprinzip arbeitenden und in der Reinigungskammer (14) angeordneten Sensor (13b) umfasst.

5. Vorrichtung nach einem der vorhergehenden Ansprüche, **dadurch gekennzeichnet, dass** die Sensoreinrichtung (13) als Schwingungssensor (13c) wenigstens einen Beschleunigungssensor umfasst, welcher mit der Wandung (15) der Reinigungskammer (14) verbunden ist.

6. Vorrichtung nach einem der vorhergehenden Ansprüche, **dadurch gekennzeichnet, dass** in der elektronischen Steuerung eine Auswertesoftware implementiert ist, welche ausgebildet ist, dass sie anhand des elektrischen Signals Störungen im Reinigungsprozess erkennt und bei einem solchen Erkennen ein Störungssignal erzeugt.

7. Vorrichtung nach Anspruch 6, **dadurch gekennzeichnet, dass** sie eine Wiedergabeeinrichtung umfasst, welche das Störungssignal optisch und/oder akustisch wiedergibt und/oder in einem Speicher abspeichert.

8. Vorrichtung nach einem der vorhergehenden Ansprüche, **dadurch gekennzeichnet, dass** die elektronische Steuerung ausgebildet ist, dass sie eine Abweichung ($\Delta f$) zwischen einem von der elektronischen Steuerung vorgegebenen Sollwert ($f_{soll}$) der Schwingungsfrequenz des realen Objekts (3) und dem mittels der Sensoreinrichtung (13) gemessenen Istwert ($f_{ist}$) der Schwingungsfrequenz (f) des realen Objekts (3) bestimmt und ausregelt.

9. Vorrichtung nach einem der vorhergehenden Ansprüche, **dadurch gekennzeichnet, dass** die elektronische Steuerung den Schwingungserreger (11, 12) derart steuert, dass eine Modalanalyse des realen Objekts (3) oder eines computergenerierten Modells des realen Objekts (3) durchgeführt und die Erregerfrequenz ($f_e$) abhängig von wenigstens einem im Laufe der Modalanalyse gewonnenen modalen Parameter ($\omega_e$) bestimmt wird.

10. Vorrichtung nach Anspruch 9, **dadurch gekennzeichnet, dass** eine Kraftanregung und/oder eine Schwingungserregung des realen Objekts (3) im Rahmen der Modalanalyse durch den Schwingungserreger (12, 13) erfolgt, durch welchen auch die Anregung des realen Objekts (3) mit der Erregerfrequenz ($f_e$) zum Trennen von unverfestigt verbliebenem Aufbaumaterial von dem realen Objekt (3) erfolgt.

11. Vorrichtung nach Anspruch 9 oder 10, **dadurch gekennzeichnet, dass** die elektronische Steuerung den Schwingungserreger (11, 12) derart steuert, dass eine im Rahmen der Modalanalyse durchgeführte Krafterregung und/oder Schwingungserregung des realen Objekts (3) zur Ermittlung des wenigstens einen modalen Parameters (we) durch eine zeitlich variierende Kraft oder durch eine Impulsartige Kraft in wenigstens einer Raumrichtung erfolgt.

12. Vorrichtung nach einem der Ansprüche 9 bis 11, **dadurch gekennzeichnet, dass** der modale Parameter die Eigenfrequenz ($\omega_e$) des realen Objekts (3) ist.

13. Vorrichtung nach Anspruch 12, **dadurch gekennzeichnet, dass** elektronische Steuerung den Schwingungserreger (11, 12) zum Trennen von unverfestigt verbliebenem Aufbaumaterial von dem realen Objekt (3) derart steuert, dass die Erregerfrequenz (fe)

    a) der mit Hilfe der Modalanalyse ermittelten Eigenfrequenz ($\omega_e$) oder einem Vielfachen der ermittelten Eigenfrequenz ($\omega_e$) entspricht, oder
    b) von der mit Hilfe der Modalanalyse ermittelten ermittelten Eigenfrequenz ($\omega_e$) oder von einer Vielfachen der ermittelten Eigenfrequenz ($\omega_e$) abweicht.

14. Vorrichtung nach einem der Ansprüche 9 bis 13, **dadurch gekennzeichnet, dass** die elektronische Steuerung den Schwingungserreger (11, 12) derart steuert, dass zu verschiedenen Zeitpunkten ($t_1$, $t_2$) der wenigstens eine modale Parameter ($\omega_{e1}$, $\omega_{e2}$)

des realen Objekts (3) bestimmt und zu einem Zeitpunkt ($t^*$) zwischen diesen Zeitpunkten ($t_1$, $t_2$) der Schritt (300; 300') der Anregung des realen Objekts (3) zu Schwingungen durch den Schwingungserreger (12, 13) mit der Erregerfrequenz ($f_e$) durchgeführt wird, wobei die elektronische Steuerung ausgebildet ist, dass sie eine Größe (G), welche eine Menge, eine Masse, einen Massenstrom, ein Volumen und/oder einen Volumenstrom des von dem realen Objekt (3) dabei getrennten, unverfestigt verbliebenen Aufbaumaterials repräsentiert, abhängig von einer Änderung ($\Delta\omega$) des wenigstens einen, zu den verschiedenen Zeitpunkten ($t_1$, $t_2$) ermittelten modalen Parameters ($\omega_{e1}$, $\omega_{e2}$) des realen Objekts (3) ermittelt oder schätzt.

15. Vorrichtung nach Anspruch 14, **dadurch gekennzeichnet, dass** die elektronische Steuerung ausgebildet ist, dass sie die Erregerfrequenz ($f_e$) der durch den Schwingungserreger (11, 12) angeregten Schwingung abhängig von der Größe (G) bestimmt.

16. Vorrichtung nach Anspruch 14 oder 15, **dadurch gekennzeichnet, dass** die elektronische Steuerung ausgebildet ist, dass sie überprüft, ob die Größe (G) kleiner oder größer gleich in Bezug auf einen Grenzwert ($G_{grenz}$) für die Größe (G) ist.

17. Vorrichtung nach Anspruch 16, **dadurch gekennzeichnet, dass** die elektronische Steuerung ausgebildet ist, dass sie,

    a) falls die Größe (G) kleiner oder größer gleich in Bezug auf einen Grenzwert ($G_{grenz}$) für die Größe (G) ist, den Schwingungserreger (11, 12) steuert, um die Anregung des realen Objekts (3) durch Schwingungen zu beenden, aber andernfalls
    b) die Anregung des realen Objekts (3) durch Schwingungen solange fortsetzt, bis die Größe (G) kleiner oder größer gleich in Bezug auf einen Grenzwert ($G_{grenz}$) für die Größe (G) ist.

18. Vorrichtung nach einem der vorhergehenden Ansprüche, **dadurch gekennzeichnet, dass** es eine Spanneinrichtung (10) und eine Schwenkeinrichtung (2) umfasst, wobei wenigstens die Schwenkeinrichtung (2) von der elektronischen Steuerung derart gesteuert ist, dass das mittels der Spanneinrichtung (10) an der Schwenkeinrichtung gespannte reale Objekt (3) um wenigstens eine Schwenkachse (4, 5) schwenkbar ist.

19. Vorrichtung nach Anspruch 18, **dadurch gekennzeichnet, dass** die elektronische Steuerung (16) die Schwenkeinrichtung (2) abhängig von dem wenigstens einen elektrischen Signal derart steuert oder regelt, so dass die Schwenkeinrichtung (2) eine auf das reale Objekt (3) übertragene Rotation abhängig von dem wenigstens einen elektrischen Signal anpasst.

20. Vorrichtung nach einem der vorhergehenden Ansprüche, **dadurch gekennzeichnet, dass** die elektronische Steuerung (16) den Schwingungserreger (11, 12) abhängig von dem wenigstens einen elektrischen Signal derart steuert oder regelt, dass die Erregerfrequenz (fe) und/oder die Erregeramplitude (Ae) abhängig von dem wenigstens einen elektrischen Signal angepasst wird.

## Claims

1. Device for separating non-solidified construction material from at least one real object (3) constructed by means of a layer-by-layer addition and selective solidification of the construction material in the context of a generative construction process, which includes an electronic controller (16) and a oscillation exciter (11, 12) controlled by the electronic controller (16), wherein the oscillation exciter (11, 12) is controlled by the electronic controller (16) such that it excites the real object (3) with at least one exciter frequency ($f_e$) and/or with at least one exciter amplitude ($A_\theta$) two oscillations, in order in the context of a cleaning procedure to separate residual non-solidified construction material from the real object (3), wherein it furthermore comprises:

   a) a closed cleaning chamber (14), having a wall (15), in which chamber the object (3) is arranged, in order to separate it in the context of the cleaning process from the residual non-solidified construction material, and
   b) a sensor apparatus (13) which detects at least one characteristic variable of the oscillations of the real object (3) and conducts it as an electrical signal into the electronic controller (16) for evaluation, wherein
   c) the sensor apparatus (13)

   c1) has at least one sensor (13a, 13b, 13d) arranged within or externally to the cleaning chamber (14) and functioning according to a contactless measuring principle, **characterised in that** the sensor apparatus (13) comprises at least one microphone (13a), arranged within the cleaning chamber (14) or externally to the cleaning chamber (14) and functioning according to a contactless measuring principle, which detects the airborne sound which the vibrations of the real object (3) directly or indirectly generate and converts them into a microphone signal as an electrical signal, and/or that

   c2) the sensor apparatus (13) has at least one oscillation sensor (13c) arranged or fastened in or against a wall (15) of the cleaning chamber (14), such that the oscillation sensor (13c) is able to detect the structure-borne sound to which the wall (15) of the cleaning chamber (14) is excited by means of the airborne sound which the real object (3), excited to oscillations, generates within the cleaning chamber (14).

2. Device according to claim 1, **characterised in that** the characteristic variable which is detected by the sensor apparatus (13) comprises at least the following: an actual value ($f_{ist}$) of an oscillation frequency (f) and/or an actual value ($A_{ist}$) on an oscillation amplitude (A) of the oscillations of the real object (3) and/or an actual value ($a_{ist}$) of an acceleration (a) of the wall (15) of the cleaning chamber (14) and/or an actual value ($SPL_{ist}$) of a sound pressure value (SPL) of the airborne sound which the real object (3) emits as a result of its oscillations.

3. Device according to any of the preceding claims, **characterised in that** the sensor apparatus (13) comprises at least one sound pressure value sensor (13d), working according to any contactless measuring principle and arranged within the cleaning chamber (14) or externally to the cleaning chamber (14), which generates an electrical signal depending on the sound pressure value (SPL) of the airborne sound emitted by the real object (3).

4. Device according to any of the preceding claims, **characterised in that** the sensor apparatus (13) comprises at least one sensor (13b) working according to optical and contactless measuring principle and arranged in the cleaning chamber (14).

5. Device according to any of the preceding claims, **characterised in that** the sensor device (13) comprises as an oscillation sensor (13c) at least one acceleration sensor which is connected with the wall (15) of the cleaning chamber (14).

6. Device according to any of the preceding claims, **characterised in that** an evaluation software is implemented in the electronic controller which is configured to recognise disturbances in the cleaning process on the basis of the electrical signal and to generate a disturbance signal on the basis of a recognition of this sort.

7. Device according to claim 6, **characterised in that** it comprises a reproduction device which reproduces the disturbance signal optically and/or acoustically and/or stores it in a storage.

8. Device according to any of the preceding claims, **characterised in that** the electronic controller is configured to specify and regulate a deviation ($\Delta f$) between a target value ($f_{soll}$), predetermined by the electronic controller, of the oscillation frequency of the real object (3) and the actual value ($f_{ist}$), measured by means of the sensor device (13), of the oscillation frequency of the real object (3).

9. Device according to any of the preceding claims, **characterised in that** the electronic controller controls the oscillation exciter (11, 12) such that a modal analysis of the real object (3) or of a computer-generated model of the real object (3) is carried out and the exciter frequency ($f_e$) is specified depending on at least one modal parameter ($\omega_e$) obtained in the course of the modal analysis.

10. Device according to claim 9, **characterised in that** a force stimulation and/or an oscillation excitation of the real object (3) is carried out in the context of the modal analysis by the oscillation exciter (12, 13), by means of which also the stimulation of the real object (3) with the exciter frequency ($f_e$) is carried out for separating non-solidified residual construction material from the real object (3).

11. Device according to claim 9 or 10, **characterised in that** the electronic controller controls the oscillation exciter (11, 12) such that a force excitation and/or a oscillation excitation of the real object (3) for determining the at least one modal parameter ($\omega_e$), carried out in the context of the modal analysis, is carried out by a temporally varying force or by an impulse-like force in at least one spatial direction.

12. Device according to any of claims 9 to 11, **characterised in that** the modal parameter is the inherent frequency ($\omega_e$) of the real object (3).

13. Device according to claim 12, **characterised in that** electronic controller controls the oscillation exciter (11, 12) for separating non-solidified residual construction material from the real object (3) such that the exciter frequency ($f_e$)

   a) is equal to the intrinsic frequency ($\omega_e$) determined with the aid of the modal analysis or is equal to a multiple of the determined intrinsic frequency ($\omega_e$), or
   b) deviates from the intrinsic frequency ($\omega_e$) determined with the aid of the modal analysis or deviates from a multiple of the determined intrinsic frequency ($\omega_e$).

14. Device according to any of claims 9 to 13, **characterised in that** the electronic controller controls the oscillation exciter (11, 12) such that at different points in time ($t_1$, $t_2$) the at least one modal parameter ($\omega_{e1}$, $\omega_{e2}$) of the real object (3) is specified and at a point in time ($t^*$) between these points in time ($t_1$, $t_2$) the step (300; 300') of the simulation of the real object (3) to oscillations on the part of the oscillation exciter (12, 13) with the exciter frequency ($f_e$) is carried out, wherein the electronic controller is configured to determine or estimate a variable (G) which represents a quantity, a mass, a mass flow, a volume and/or a volume flow of non-solidified residual construction material in this regard separated from the real object (3), independently of a change ($\Delta\omega$) in the at least one modal parameter ($\omega_{e1}$, $\omega_{e2}$) of the real object (3) determined at the various points in time ($t_1$, $t_2$).

15. Device according to claim 14, **characterised in that** the electronic controller is configured to specify the exciter frequency ($f_e$) of the oscillation stimulated by the oscillation exciter (11, 12) independently of the variable (G).

16. Device according to claim 14 or 15, **characterised in that** the electronic controller is configured to verify whether the variable (G) is smaller than or greater than or equal to a threshold value ($G_{grenz}$) for the variable (G).

17. Device according to claim 16, **characterised in that** the electronic controller is configured,

   a) if the variable (G) is smaller than or greater than or equal to a threshold value ($G_{grenz}$) for the variable (G), to actuate the oscillation exciter (11, 12) to end the stimulation of the real object (3) by means of oscillations, but, if this is not the case,
   b) to continue the stimulation of the real object (3) by means of oscillations until the variable (G) is smaller than or greater than or equal to a threshold value ($Gg_{renz}$) for the variable (G).

18. Device according to any of the preceding claims, **characterised in that** it comprises a tensioning apparatus (10) and a pivoting apparatus (2), wherein at least the pivoting apparatus (2) is controlled by the electronic controller such that the real object (3) tensions at the pivoting device by means of the tensioning device (10) is pivotable about at least one pivot axis (4, 5).

19. Device according to claim 18, **characterised in that** the electronic controller (16) controls or regulates the pivoting apparatus (2) depending on the at least one electrical signal such that the pivoting apparatus (2) adapts a rotation transmitted to the real object (3) depending on the at least one electrical signal.

20. Device according to any of the preceding claims,

**characterised in that** the electronic controller (16) controls or regulates oscillation exciter (11, 12) depending on the at least one electrical signal such that the exciter frequency (fe) and/or the exciter amplitude (Ae) is adapted depending on the at least one electrical signal.

## Revendications

1. Dispositif de séparation de matière de construction restée non-consolidée d'au moins un objet réel (3) conçu par application par couches et consolidation sélective de la matière de construction dans le cadre d'un processus de construction génératif qui comprend une commande électronique (16) et un excitateur d'oscillations (11, 12) commandé par la commande électronique (16), dans lequel l'excitateur d'oscillations (11, 12) est commandé par la commande électronique (16) de manière à exciter l'objet réel (3) avec au moins une fréquence d'excitateur ($f_e$) et/ou avec au moins une amplitude d'excitateur ($A_\theta$) pour le faire osciller afin de séparer de la matière de construction restée non-consolidée dans le cadre d'un processus de nettoyage de l'objet réel (3), dans lequel il comporte en outre :

   a) une chambre de nettoyage (14) présentant une paroi (15), fermée, dans laquelle l'objet (3) est agencé afin de le séparer dans le cadre du processus de nettoyage de la matière de construction restée non-consolidée, et
   b) un dispositif capteur (13) qui détecte au moins une grandeur caractéristique des oscillations de l'objet réel (3) et l'injecte comme signal électrique dans la commande électronique (16) pour évaluation, dans lequel
   c) le dispositif capteur (13)

      c1) présente au moins un capteur (13a, 13b, 13d) travaillant selon un principe de mesure sans contact et agencé dans ou en dehors de la chambre de nettoyage (14), **caractérisé en ce que** le dispositif capteur (13) comporte au moins un microphone (13a) travaillant selon un principe de mesure sans contact et agencé dans la chambre de nettoyage (14) ou en dehors de la chambre de nettoyage (14), qui détecte le son aérien, que génèrent directement ou indirectement les oscillations de l'objet réel (3), et qui le convertit en un signal de microphone comme signal électrique, et/ou que
      c2) le dispositif capteur (13) présente au moins un capteur d'oscillation (13c) fixé ou agencé dans ou sur une paroi (15) de la chambre de nettoyage (14) de telle manière que le capteur d'oscillation (13c) puisse détecter le son de corps, auquel la paroi (15) de la chambre de nettoyage (14) est excitée par le son aérien que génère l'objet réel (3) excité pour le faire osciller dans la chambre de nettoyage (14).

2. Procédé selon la revendication 1, **caractérisé en ce que** la grandeur caractéristique qui est détectée par le dispositif capteur (13), comporte au moins ce qui suit : une valeur réelle ($f_{ist}$) d'une fréquence d'oscillations (f) et/ou une valeur réelle ($A_{ist}$) d'une amplitude d'oscillations (A) des oscillations de l'objet réel (3) et/ou une valeur réelle ($a_{ist}$) d'une accélération (a) de la paroi (15) de la chambre de nettoyage (14) et/ou une valeur réelle ($SPL_{ist}$) d'un niveau de pression sonore (SPL) du son aérien qu'émet l'objet réel (3) à la suite de ses oscillations.

3. Dispositif selon l'une quelconque des revendications précédentes, **caractérisé en ce que** le dispositif capteur (13) présente au moins un capteur de niveau de pression sonore (13d) agencé dans la chambre de nettoyage (14) ou en dehors de la chambre de nettoyage (14) et travaillant selon un principe de mesure sans contact qui génère un signal électrique dépendant du niveau de pression sonore (SPL) du son aérien émis par l'objet réel (3).

4. Dispositif selon l'une quelconque des revendications précédentes, **caractérisé en ce que** le dispositif capteur (13) présente au moins un capteur (13b) agencé dans la chambre de nettoyage (14) et travaillant selon un principe de mesure optique et sans contact.

5. Dispositif selon l'une quelconque des revendications précédentes, **caractérisé en ce que** le dispositif capteur (13) présente comme capteur d'oscillations (13c) au moins un capteur d'accélération qui est relié à la paroi (15) de la chambre de nettoyage (14).

6. Dispositif selon l'une quelconque des revendications précédentes, **caractérisé en ce que** dans la commande électronique un logiciel d'évaluation est implémenté, lequel est configuré afin qu'il reconnaisse à l'aide du signal électrique des perturbations dans le processus de nettoyage et génère un signal de perturbation en cas d'une telle reconnaissance.

7. Dispositif selon la revendication 6, **caractérisé en ce qu'**il comporte un dispositif de rendu qui rend optiquement et/ou acoustiquement le signal de perturbation et/ou l'enregistre dans une mémoire.

8. Dispositif selon l'une quelconque des revendications précédentes, **caractérisé en ce que** la commande électronique est configurée afin qu'elle détermine et régule un écart ($\Delta f$) entre une valeur de consigne

(f$_{soll}$) prédéfinie par la commande électronique de la fréquence d'oscillations de l'objet réel (3) et la valeur réelle (f$_{ist}$) mesurée au moyen du dispositif capteur (13) de la fréquence d'oscillations (f) de l'objet réel (3).

9. Dispositif selon l'une quelconque des revendications précédentes, **caractérisé en ce que** la commande électronique commande l'excitateur d'oscillations (11, 12) de telle manière qu'une analyse modale de l'objet réel (3) ou d'un modèle généré par ordinateur de l'objet réel (3) soit réalisée et la fréquence d'excitateur (f$_e$) soit déterminée en fonction d'au moins un paramètre modal ($\omega_e$) obtenu au cours de l'analyse modale.

10. Dispositif selon la revendication 9, **caractérisé en ce qu'**une excitation de force et/ou une excitation d'oscillations de l'objet réel (3) est effectuée dans le cadre de l'analyse modale par l'excitateur d'oscillations (12, 13), par lequel l'excitation de l'objet réel (3) est aussi effectuée avec la fréquence d'excitateur (f$_e$) pour séparer de la matière de construction restée non-consolidée de l'objet réel (3).

11. Dispositif selon la revendication 9 ou 10, **caractérisé en ce que** la commande électronique commande l'excitateur d'oscillations (11, 12) de telle manière qu'une excitation de force et/ou excitation d'oscillations réalisée dans le cadre de l'analyse modale de l'objet réel (3) soit effectuée pour la détermination d'au moins un paramètre modal ($\omega_e$) par une force variant temporellement ou par une force à impulsion dans au moins un sens spatial.

12. Dispositif selon l'une quelconque des revendications 9 à 11, **caractérisé en ce que** le paramètre modal est la propre fréquence ($\omega_e$) de l'objet réel (3).

13. Dispositif selon la revendication 12, **caractérisé en ce que** la commande électronique commande l'excitateur d'oscillations (11, 12) pour la séparation de matière de construction restée non-consolidée de l'objet réel (3) de telle manière que la fréquence d'excitateur (f$_e$)

    a) corresponde à la fréquence propre ($\omega_e$) calculée à l'aide de l'analyse modale ou un multiple de la fréquence propre ($\omega_e$) calculée, ou
    b) diverge de la fréquence propre ($\omega_e$) déterminée à l'aide de l'analyse modale ou d'un multiple de la fréquence propre ($\omega_e$) déterminée.

14. Dispositif selon l'une quelconque des revendications 9 à 13, **caractérisé en ce que** la commande électronique commande l'excitateur d'oscillations (11, 12) de telle manière qu'à différents moments (t$_1$, t$_2$), l'au moins un paramètre modal ($\omega_{e1}$, $\omega_{e2}$) de l'objet réel (3) soit déterminé et à un moment (t*) entre ces moments (t$_1$, t$_2$), l'étape (300 ; 300') de l'excitation de l'objet réel (3) est réalisée à des oscillations venant de l'excitateur d'oscillations (12, 13) avec la fréquence d'excitateur (f$_e$), dans lequel la commande électronique est configurée afin qu'elle calcule ou estime une grandeur (G) qui représente une quantité, une masse, un courant de masse, un volume et/ou un courant de volume de la matière de construction restée non-consolidée séparée de l'objet réel (3), en fonction d'une modification ($\Delta\omega$) d'au moins un paramètre modal ($\omega_{e1}$, $\omega_{e2}$) déterminé aux moments différents (t$_1$, t$_2$) de l'objet réel (3).

15. Dispositif selon la revendication 14, **caractérisé en ce que** la commande électronique est configurée afin qu'elle détermine la fréquence d'excitateur (f$_e$) de l'oscillation excitée par l'excitateur d'oscillations (11, 12) en fonction de la grandeur (G).

16. Dispositif selon la revendication 14 ou 15, **caractérisé en ce que** la commande électronique est configurée afin qu'elle vérifie si la grandeur (G) est inférieure ou supérieure ou égale par rapport à une valeur limite (G$_{grenz}$) pour la grandeur (G).

17. Dispositif selon la revendication 16, **caractérisé en ce que** la commande électronique est configurée afin qu'elle

    a) commande l'excitateur d'oscillations (11, 12) dans le cas où la grandeur (G) est inférieure ou supérieure ou égale par rapport à une valeur limite (G$_{grenz}$) pour la grandeur (G) afin de terminer l'excitation de l'objet réel (3) par des oscillations mais sinon
    b) poursuit l'excitation de l'objet réel (3) par des oscillations jusqu'à ce que la grandeur (G) soit inférieure ou supérieure ou égale par rapport à une valeur limite (Gg$_{renz}$) pour la grandeur (G).

18. Dispositif selon l'une quelconque des revendications précédentes, **caractérisé en ce qu'**il comporte un dispositif de serrage (10) et un dispositif de pivotement (2), dans lequel au moins le dispositif de pivotement (2) est commandé par la commande électronique de telle manière que l'objet réel (3) serré au moyen du dispositif de serrage (10) au niveau du dispositif de pivotement soit pivotant autour d'au moins un axe de pivotement (4, 5).

19. Dispositif selon la revendication 18, **caractérisé en ce que** la commande électronique (16) commande ou régule le dispositif de pivotement (2) en fonction de l'au moins un signal électrique de telle manière que le dispositif de pivotement (2) adapte une rotation transmise à l'objet réel (3) en fonction de l'au moins un signal électrique.

**20.** Dispositif selon l'une quelconque des revendications précédentes, **caractérisé en ce que** la commande (16) électronique commande ou régule l'excitateur d'oscillations (11, 12) en fonction de l'au moins un signal électrique de telle manière que la fréquence d'excitateur (fe) et/ou l'amplitude d'excitateur (Ae) soit adaptée en fonction de l'au moins un signal électrique.

FIG. 1

```
Modalanalyse (t1)                           — 100

         ↓

Eigenfrequenz ωe1                           — 200
erfassen

         ↓

Schwingungserregung mit                     — 300
Erregerfrequenz fe

         ↓

Frequenzregelung                            — 400

         ↓

Modalanalyse (t2)                           — 500

         ↓

Eigenfrequenz ωe2
erfassen                                    — 600
```

FIG. 2

400

| fsoll → | REGLER Δf | → | STELLGLIED (Schwingungs -anreger) | fe → | REGELSTRECKE (Objekt) | fist → |
|---------|-----------|---|-----------------------------------|------|------------------------|--------|

Sensoreinrichtung 13

FIG. 3

Modalanalyse (t1) — 100'

Eigenfrequenz ωe1 erfassen — 200'

Schwingungserregung mit Erregerfrequenz fe — 300'

Modalanalyse (t2) — 400'

Eigenfrequenz ωe2 erfassen — 500'

Größe G aus Δω ermitteln — 600'

G < Ggrenz — 700'

NEIN

JA

ENDE

FIG. 4

Sensoreinrichtung 13

$a_{ist}$, $f_{ist}$, $A_{ist}$, $SPL_{ist}$

Elektronische Steuerung 16

Schwingungserreger 11, 12

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018093958 A1

- WO 2015071184 A1